# FASCICULE DE BREVET EUROPEEN

(11) **EP 3 599 870 B1**
(45) Date de publication et mention de la délivrance du brevet: **21.06.2023**
(21) Numéro de dépôt: 18715227.7
(22) Date de dépôt: 23.03.2018
(51) Int. Cl.: A21C 1/14, A21D 8/04

(54) **DISTRIBUTION DE LEVURE EN BOULANGERIE OU D'UN AUTRE FLUIDE ALIMENTAIRE**
HEFE- ODER ANDERE NAHRUNGSFLÜSSIGKEITVERTRIEB IN BACKEN
DISTRIBUTION OF YEAST OR ANOTHER FOOD-RELATED FLUID IN BAKING

(30) Priorité: 23.03.2017 FR 1752432
(43) Date de publication de la demande: 05.02.2020
(73) Titulaire: Lesaffre et Compagnie, 75001 Paris (FR)
(72) Inventeur: PICAVET, Florent, 59700 Marcq en Baroeul (FR)
(74) Mandataire: Plasseraud IP
(86) Numéro de dépôt international: PCT/FR2018/050708
(87) Numéro de publication internationale: WO 2018/172716

(56) Documents cités:
- EP-A1- 0 792 930
- WO-A1-82/00011
- WO-A2-2015/011403
- FR-A1- 3 023 125
- GB-A- 2 309 772
- US-A1- 2008 302 824

## Description

### DOMAINE DE L'INVENTION

L'invention concerne le domaine de la télédistribution de levure ou de levain en boulangerie, lorsque la chambre réfrigérée, où est stockée la levure ou levain, est déportée par rapport au pétrin, où est utilisée la levure ou levain. A la place de la levure ou du levain, ou de la crème de levure ou de la crème de levain, un autre type d'additif levant fluide peut être utilisé. De manière similaire, à la place de la levure ou du levain, un autre fluide alimentaire peut être utilisé. Dans toute la suite du texte, tout ce qui sera mentionné à propos de la levure, pourra être transposé au levain, à un autre additif levant fluide, ou même à un autre fluide alimentaire, sauf mention contraire. L'additif levant fluide ou le fluide alimentaire sera avantageusement visqueux.

### CONTEXTE DE L'INVENTION

Un système de distribution de levure liquide, et en particulier un système de télédistribution de levure liquide, va proposer aux boulangers, travaillant dans des boulangeries de taille intermédiaire, par exemple pour une boulangerie de type semi industrielle ou pour un boulanger de type gros artisan, un dosage direct au pétrin ou à un autre point de dosage.

Le stockage de la levure liquide est réalisé, soit dans des cuves réfrigérées, soit dans des réservoirs stockés dans une chambre réfrigérée ou dans une chambre froide. Dans la suite du texte, on utilisera l'expression « chambre réfrigérée » pour désigner indifféremment une chambre réfrigérée ou une chambre froide.

Un système de télédistribution de levure liquide va devoir acheminer la levure liquide de manière automatique jusqu'au pétrin ou jusqu'au point de dosage. Pour cela, plusieurs solutions existent.

Selon un premier art antérieur, il est connu un dosage en boucle. Dans un dosage en boucle, la levure liquide circule dans une tuyauterie d'alimentation calorifugée puis retourne dans la chambre réfrigérée. Ceci permet d'approcher la levure liquide au plus près du pétrin ou du point de dosage, tout en conservant une température homogène et relativement froide de cette levure liquide.

Le dosage en boucle nécessite un surdimensionnement de l'installation laquelle n'est alors plus forcément optimisée, et en particulier qui n'est alors plus forcément adaptée à une boulangerie de taille intermédiaire. En effet, le débit important d'alimentation nécessité pour amener la levure liquide ou la crème de levure jusqu'au point de dosage, implique une section importante de la tuyauterie et/ou une puissance importante de la pompe de circulation. Or, pour les autres phases de fonctionnement de l'installation, à savoir rafraîchissement, récupération et nettoyage, cette section importante de la tuyauterie et/ou cette puissance importante de la pompe de circulation deviennent surdimensionnées.

Ce premier art antérieur présente par conséquent l'inconvénient d'être coûteux. En particulier, pour les boulangeries de taille relativement modeste, typiquement correspondant à une consommation en levure hebdomadaire limitée, comme par exemple moins de 1000 litres de levure par semaine, ce coût va pouvoir être considéré comme trop important. En d'autres termes, ce surdimensionnement de la section de la tuyauterie et/ou de la puissance de la pompe de circulation, va devenir d'autant plus coûteux et plus inutile, que la taille de la boulangerie est réduite.

Selon un deuxième art antérieur, il est connu un dosage en antenne. Dans le dosage en antenne, la levure liquide est acheminée jusqu'au pétrin par une tuyauterie calorifugée sans retour. Cette absence de retour vers la chambre réfrigérée entraîne plusieurs contraintes.

D'abord, une quantité dosée de levure liquide qui sort de la chambre réfrigérée doit être consommée rapidement, ce qui implique que la distance de tuyauterie d'alimentation entre chambre réfrigérée et pétrin ne doit pas être trop grande. Sinon, la levure sortie de la chambre réfrigérée, mais non encore déversée dans le pétrin ou dans le point de dosage, va s'échauffer et voir sa qualité diminuer au fil du temps jusqu'à devenir inconsommable au bout d'un certain temps.

Ensuite, en fin de journée, il faut mettre à l'égout cette levure liquide encore située dans la tuyauterie d'alimentation, ce qui entraîne beaucoup de pertes en levure liquide.

Ce deuxième art antérieur propose un système qui est toutefois moins coûteux que celui du premier art antérieur. Ce deuxième art antérieur semble toutefois mieux adapté aux boulangeries de taille intermédiaire ou réduite.

FR 3023125 A1 et GB 2309772 A divulguent différents systèmes de distribution de fluide.

### RESUME DE L'INVENTION

Le but de la présente invention est de fournir un dispositif de distribution de levure et un système de distribution de levure associé palliant au moins partiellement les inconvénients précités.

Selon l'invention, pour s'affranchir des inconvénients de l'art antérieur, à savoir notamment pour s'affranchir à la fois du coût élevé pour le système de télédistribution de levure du premier art antérieur et du niveau élevé de pertes en levure pour le système de télédistribution de levure du deuxième art antérieur, l'invention propose d'une part, dans une configuration, de conserver la boucle de circulation de levure, mais de la sous-dimensionner pour lui conférer un caractère utile et rentable, même pour des tailles intermédiaires de boulangerie, tout en créant, d'autre part, une autre configuration dans laquelle non seulement la partie « aller » mais aussi cette fois-ci la partie « retour » de la boucle de circulation sont toutes deux simultanément utilisées pour alimenter le point de dosage en levure. Le sous-dimensionnement de la boucle de circulation est un sous-dimensionnement par rapport au dimensionnement requis pour l'alimentation en levure lorsque celle-ci n'est effectuée que par une seule portion de tuyauterie.

Un premier avantage réside dans le fait de pouvoir utiliser deux portions ou deux tronçons de tuyauterie simultanément pour alimenter en levure un point de dosage, ce qui multiplie par deux le débit d'alimentation en levure, et ce qui permet ensuite de réduire la section de la tuyauterie, tout en satisfaisant le haut niveau de débit requis par l'alimentation en levure du point de dosage.

Un deuxième avantage réside dans le fait de pouvoir faire circuler du fluide, alimentaire et/ou non alimentaire, dans la boucle de circulation, au travers d'une section réduite de tuyauterie, ce qui permet d'assurer une vitesse de circulation suffisante dans la boucle de circulation, tout en conservant une puissance (et une taille) de pompe de circulation qui reste raisonnable, le niveau relativement élevé de vitesse de circulation requise pour la boucle de circulation étant ainsi satisfait avec une puissance de pompe limitée.

En résumé, pour satisfaire à la fois le débit élevé requis en mode alimentation et la vitesse élevée requise en mode boucle, l'invention propose d'une part une alimentation par tuyauterie double pour diminuer la section de chaque portion de tuyauterie, tout en conservant le débit élevé requis en mode alimentation, ce qui permet ensuite d'autre part d'assurer, dans la boucle de circulation à section de tuyauterie réduite, la vitesse élevée requise en mode boucle, tout en conservant une puissance et une taille raisonnables de pompe de circulation. Si la section de tuyauterie n'est pas réduite, la capacité d'alimentation en fluide alimentaire est alors doublée. Ce qui est intéressant, c'est que la section totale d'alimentation en fluide alimentaire est notablement augmentée, ici doublée, par rapport à la section totale de boucle de circulation, et ceci sera d'autant plus intéressant que le débit d'alimentation est le paramètre principal pour l'alimentation en fluide alimentaire, tandis que la vitesse de circulation est le paramètre principal pour la boucle de circulation.

Le passage d'un mode alimentation en mode boucle, et vice-versa, est réalisé par un changement correspondant de la configuration d'un jeu de vanne(s), comprenant avantageusement soit plusieurs vannes simples, soit une seule vanne complexe comme par exemple une vanne trois voies.

Ce compromis avantageux qui permet de conserver l'essentiel des avantages d'une télédistribution en antenne ainsi que l'essentiel des avantages d'une télédistribution en boucle, peut être appelée télédistribution en « antoucle » (antenne et boucle).

Selon des modes de réalisation de l'invention, il est possible, de rafraîchir au bout d'un certain temps la levure déjà sortie de la chambre réfrigérée mais pas encore déversée au point de dosage, et/ou de récupérer en fin de période de dosage la levure déjà sortie de la chambre réfrigérée mais pas encore déversée au point de dosage, et/ou de réduire de moitié la section de tuyauterie ce qui permet de doubler l'efficacité du compromis entre d'une part vitesse de nettoyage de la tuyauterie et d'autre part puissance de la pompe de circulation.

Dans d'autres utilisations de système de distribution de levure liquide, la levure liquide est dosée dans la tuyauterie d'alimentation pour être ensuite poussée par de l'eau jusqu'au point de dosage. L'eau qui a servie à la pousse de la levure liquide se retrouvera donc dans le point de dosage suivant (dans le temps), et ainsi de suite. De cette manière, la levure liquide ne reste pas longtemps dans la tuyauterie d'alimentation. Le risque d'échauffement et le risque de montée en pression dans la tuyauterie d'alimentation, en raison d'un travail de la levure liquide commencé après un temps de séjour trop long dans cette tuyauterie d'alimentation, travail en particulier favorisé par l'augmentation en température de la levure liquide restant hors de la chambre réfrigérée, sont considérablement réduits, voire pratiquement supprimés. Le calorifugeage de la tuyauterie d'alimentation, même s'il peut parfois être conservé, n'est soit plus nécessaire, soit peut être réduit. Le procédé de pousse à l'eau pour alimenter un point de dosage ou un pétrin en levure liquide est connu de la demande brevet française FR 1456386 à laquelle il est fait référence pour plus de détail sur ce procédé de pousse à l'eau. L'utilisation de la présente inventive permet de supprimer ce processus de pousse à l'eau, permettant ainsi de simplifier notablement l'ensemble du système de distribution de levure.

Selon des modes de réalisation de l'invention, le système de distribution ou de télédistribution de levure liquide peut présenter tout ou partie des avantages suivants. Le temps de séjour de la levure liquide hors de la chambre réfrigérée est réduit. La perte de levure liquide en fin de journée est notablement réduite, voire pratiquement supprimée, car il n'y a plus de pousse à l'égout de la levure liquide restant dans la tuyauterie d'alimentation. Le système de distribution ou de télédistribution de levure liquide est globalement plus léger en poids et moins coûteux en argent. La solution proposée permet de s'affranchir de la contrainte créée par la distance entre chambre réfrigérée et point de dosage. La solution proposée est d'autant plus intéressante que le nombre de points de dosage augmente et que les distances à la chambre réfrigérée sont différentes, car la quantité de levure liquide susceptible de rester dans la tuyauterie d'alimentation hors de la chambre réfrigérée et le temps de séjour dans cette tuyauterie d'alimentation hors de la chambre réfrigérée augmentent notablement avec le nombre de points de dosage. Par ailleurs, une augmentation importante de la longueur totale de la boucle de circulation, en particulier de la boucle de circulation d'eau de nettoyage, rend particulièrement intéressante la diminution de la section de la tuyauterie, afin de pouvoir, à puissance pompe de circulation limitée, tout de même maintenir une vitesse élevée de circulation de fluide, en particulier d'eau de nettoyage.

Selon des modes de réalisation de l'invention, doubler le nombre de tronçons de la tuyauterie pour alimenter un point de dosage en fluide alimentaire permet de réduire les pertes de charge correspondantes, ce qui permet de réduire la section de la tuyauterie utilisée tout en conservant une puissance de pompe de circulation similaire ou comparable, ce qui permet de réduire le débit de nettoyage tout en conservant une bonne qualité de nettoyage. En fin de compte, la pompe de circulation, surdimensionnée pour le nettoyage par rapport à l'alimentation en fluide alimentaire, sera toutefois notablement moins surdimensionnée avec l'utilisation du procédé de distribution de fluide alimentaire selon l'invention.

A cette fin, la présente invention propose un procédé de distribution de fluide alimentaire en boulangerie, comprenant une circulation de fluide alimentaire, depuis une chambre réfrigérée jusqu'à au moins un point de dosage, dans une tuyauterie d'alimentation située entre la chambre réfrigérée et le point de dosage, la chambre réfrigérée étant déportée par rapport au point de dosage, caractérisé en ce que la tuyauterie d'alimentation comprend deux tronçons de tuyauterie et un jeu de vanne(s) disposés de manière à ce que : pour une première configuration du jeu de vanne(s), les deux tronçons de tuyauterie fournissent en fluide alimentaire, en parallèle et simultanément, le point de dosage à partir d'au moins un réservoir de fluide alimentaire situé dans la chambre réfrigérée, pour au moins une autre configuration du jeu de vanne(s), les deux tronçons de tuyauterie forment une boucle de circulation de fluide.

A cette fin, la présente invention propose aussi un système de distribution de fluide alimentaire levure liquide en boulangerie, comprenant : un point de dosage, une chambre réfrigérée déportée par rapport au point de dosage, comprenant au moins un réservoir de fluide alimentaire, une tuyauterie d'alimentation disposée entre la chambre réfrigérée et le point de dosage de manière à ce que du fluide alimentaire circule depuis la chambre réfrigérée jusqu'au point de dosage, disposés de manière à mettre en oeuvre le procédé de distribution de fluide alimentaire en boulangerie selon l'invention.

Le système selon l'invention peut aussi utiliser le point de dosage et la chambre réfrigérée qui sont situées chez le boulanger, ne fournissant que le dispositif de distribution de levure liquide situé entre la chambre réfrigérée et le pétrin. A cette fin, la présente invention propose aussi un dispositif de distribution de levure liquide en boulangerie, depuis une chambre réfrigérée déportée jusqu'à un pétrin comprenant tout le système de distribution mais sans le ou les points de dosage et sans la chambre réfrigérée, éventuellement également sans le ou les réservoirs de fluide alimentaire.

Suivant des modes de réalisation préférés, l'invention comprend une ou plusieurs des caractéristiques suivantes qui peuvent être utilisées séparément ou en combinaison partielle entre elles ou en combinaison totale entre elles, notamment avec l'un ou l'autre des objets précités.

De préférence, la boucle de circulation de fluide est une boucle de circulation de fluide alimentaire ou de fluide non alimentaire. Ainsi, dans un premier cas, le fluide alimentaire peut circuler en boucle, en particulier pour être rafraîchi ou récupéré, et dans un deuxième cas, un fluide ou un liquide de nettoyage peut circuler pour nettoyer la tuyauterie après utilisation par le fluide alimentaire.

De préférence, le fluide non alimentaire présente une viscosité d'au plus 5 centipoises (cps), de préférence d'au plus 2 centipoises (cps), encore plus de préférence d'environ 1 centipoise (cps). La très faible viscosité du fluide non alimentaire est à mettre en parallèle avec la viscosité intermédiaire mais beaucoup plus élevée du fluide alimentaire : cette différence de viscosité impliquant des contraintes différentes pour les deux fluides, alimentaire et non alimentaire, vitesse modérée mais débit conséquent pour le fluide alimentaire et vitesse élevée pour le fluide non alimentaire, le compromis proposé par l'invention en est d'autant plus intéressant, et il devient encore plus intéressant lorsque ce compromis doit être réalisé de préférence avec la même pompe de circulation, pour faire circuler le fluide alimentaire comme le fluide non alimentaire.

De préférence, le fluide non alimentaire est de l'eau de nettoyage. La viscosité est très faible, et la vitesse requise de circulation élevée.

De préférence, le fluide alimentaire présente une viscosité d'au moins 50 centipoises (cps), de préférence d'au moins 100 centipoises (cps), encore plus de préférence d'environ 150 centipoises (cps). Cette viscosité intermédiaire mais beaucoup plus élevée du fluide alimentaire que la très faible viscosité du fluide non alimentaire rend, comme déjà expliqué ci-dessus, le compromis proposé par l'invention particulièrement intéressant.

De préférence, le fluide alimentaire est un additif levant, c'est-à-dire un additif faisant lever une pâte. Cet additif levant peut donc être ajouté directement à la pâte, par exemple une pâte farineuse, pour, avec de l'eau, donner (après cuisson ultérieure) un article de boulangerie, par exemple de type pain, viennoiserie ou gâteau, de manière très pratique, c'est-à-dire à la demande du boulanger, sans subir d'échauffement excessif en cas de pause un peu longue, sans entraîner de gâchis important en fin de cycle de dosage, et en assurant une bonne hygiène grâce à un nettoyage simple et efficace entre deux cycles de dosage.

De préférence, le fluide alimentaire est de la levure liquide ou de la crème de levure ou du levain liquide ou de la crème de levain. Ce sont des additifs levants préférentiels.

De préférence, le fluide alimentaire est de la levure liquide ou de la crème de levure. Ce sont les additifs levants les plus préférentiels.

De préférence, les deux tronçons de tuyauterie et le jeu de vanne(s) sont disposés de manière à ce que, pour une deuxième configuration du jeu de vanne(s), les deux tronçons de tuyauterie forment une boucle fermée de circulation de fluide alimentaire passant par le réservoir de fluide alimentaire situé dans la chambre réfrigérée. Ainsi, il est possible de rafraîchir au bout d'un certain temps le fluide alimentaire déjà sorti de la chambre réfrigérée mais pas encore déversé au point de dosage, ce qui évite son échauffement excessif au cours du temps dégradant la qualité du fluide alimentaire et pouvant même conduire à la perte du fluide alimentaire.

De préférence, les deux tronçons de tuyauterie et le jeu de vanne(s) sont disposés de manière à ce que, pour une troisième configuration du jeu de vanne(s), les deux tronçons de tuyauterie forment une boucle ouverte de circulation de fluide alimentaire ramenant dans la chambre réfrigérée le fluide alimentaire située dans la tuyauterie en la poussant avec un fluide qui est de préférence de l'eau ou de l'air. Ainsi, il est possible de récupérer en fin de période de dosage le fluide alimentaire déjà sorti de la chambre réfrigérée mais pas encore déversé au point de dosage, ce qui permet d'éviter de perdre ce fluide alimentaire non utilisé en fin de période de dosage, par exemple en fin de semaine, ou par exemple en fin de journée si la boulangerie ne fonctionne pas pendant la nuit.

De préférence, les deux tronçons de tuyauterie et le jeu de vanne(s) sont disposés de manière à ce que, pour une quatrième configuration du jeu de vanne(s), les deux tronçons de tuyauterie forment une boucle fermée de circulation d'eau de nettoyage, avant vidange de cette eau de nettoyage, avantageusement au niveau d'un ou de plusieurs points bas de la tuyauterie. Ainsi, il est possible de réduire de moitié la section de tuyauterie ce qui permet de doubler l'efficacité du compromis entre d'une part vitesse de nettoyage de la tuyauterie et d'autre part puissance de la pompe de circulation, ce qui permet de continuer à bien nettoyer la tuyauterie sans avoir besoin d'augmenter la puissance de la pompe de circulation ou sans avoir besoin de trop l'augmenter.

De préférence, les deux tronçons de tuyauterie sont reliés entre eux au moins : d'une part au niveau d'une dérivation d'alimentation du point de dosage, d'autre part au niveau d'un embranchement qui est situé en aval d'une pompe de circulation de fluide mais qui n'est pas situé au niveau d'une dérivation d'alimentation de point de dosage, l'autre configuration du jeu de vanne(s) ferme, pour le retour de la boucle de circulation, la direction dudit embranchement. Ainsi, pratiquement simplement en ajoutant d'une part un embranchement reliant les deux tronçons de tuyauterie en aval d'une pompe de circulation de fluide et d'autre part un jeu de vanne(s) pour ouvrir ou fermer la direction de cet embranchement sur le retour de la boucle de circulation, le bon compromis selon l'invention peut être réalisé. La modification et le surcoût par rapport à un système classique de télédistribution de levure sont minimes pour le gain obtenu qui est important. De cette manière, le passage d'un mode alimentation en mode boucle, et vice-versa, est réalisé par un changement correspondant de la configuration de ce jeu de vanne(s), comprenant avantageusement soit deux vannes simples, soit une seule vanne trois voies.

De préférence, les deux tronçons de tuyauterie sont reliés entre eux au moins : d'une part au niveau d'une dérivation d'alimentation du point de dosage, d'autre part au niveau d'un embranchement qui est situé en aval d'une pompe de circulation de fluide alimentaire dont l'amont est relié au réservoir situé dans la chambre réfrigérée mais qui n'est pas situé au niveau d'une dérivation d'alimentation de point de dosage, la deuxième configuration du jeu de vanne(s) et/ou la troisième configuration du jeu de vanne(s) ferme, pour le retour de la boucle fermée et/ou pour le retour de la boucle ouverte, de circulation de fluide alimentaire vers la chambre réfrigérée, la direction dudit embranchement. Ainsi ce sont ces mêmes simple embranchement et simple jeu de vanne(s) qui permettent le passage du mode alimentation en fluide alimentaire en mode boucle de rafraîchissement du fluide alimentaire, tout comme le passage d'un mode alimentation en fluide alimentaire en mode boucle de récupération du fluide alimentaire.

De préférence, les deux tronçons de tuyauterie sont reliés entre eux au moins : d'une part au niveau d'une dérivation d'alimentation du point de dosage, d'autre part au niveau d'un embranchement qui est situé en aval d'une pompe de circulation d'eau de nettoyage dont l'amont est relié à une arrivée d'eau de nettoyage mais qui n'est pas situé au niveau d'une dérivation d'alimentation de point de dosage, la quatrième configuration du jeu de vanne(s) ferme, pour le retour de la boucle fermée de circulation d'eau de nettoyage, la direction dudit embranchement. Ainsi ce sont ces mêmes simple embranchement et simple jeu de vanne(s) qui permettent le passage du mode alimentation en fluide alimentaire en mode boucle de circulation d'eau de nettoyage pour nettoyer la tuyauterie avant réutilisation ultérieure en mode alimentation en fluide alimentaire.

De préférence, les deux tronçons de tuyauterie sont parallèles entre eux. Ainsi, d'une part l'encombrement global de la tuyauterie est minimisé et d'autre part la symétrie obtenue diminue l'impact de la perte de charge le long des tronçons en mode alimentation simultanée en parallèle.

De préférence, la circulation de fluide alimentaire ne comprend qu'une seule pompe de circulation. Ainsi, le coût et la complexité du système global de distribution sont réduits, et le compromis proposé par l'invention en devient encore plus intéressant.

De préférence, la circulation de fluide alimentaire comprend une pompe de circulation, la prise d'eau ou la prise d'air est située juste en amont de cette pompe de circulation. Ainsi, la pression du réseau de distribution est disponible immédiatement à l'entrée de la pompe de circulation, sans perte de charge. Il est toutefois possible de disposer la prise d'eau ou la prise d'air est située juste en aval de cette pompe de circulation.

De préférence, la circulation de fluide alimentaire s'effectue, depuis la chambre réfrigérée jusqu'à plusieurs points de dosage, dans une tuyauterie d'alimentation située entre la chambre réfrigérée et les points de dosage, la chambre réfrigérée étant déportée par rapport aux points de dosage, les deux tronçons de tuyauterie et le jeu de vanne(s) sont disposés de manière à ce que, pour la première configuration du jeu de vanne(s), les deux tronçons de tuyauterie fournissent en fluide alimentaire, en parallèle et simultanément, plusieurs des points de dosage, de préférence tous les points de dosage, à partir d'au moins un réservoir de fluide alimentaire situé dans la chambre réfrigérée, pour au moins l'autre configuration du jeu de vanne(s), les deux tronçons de tuyauterie forment une seule boucle de circulation de fluide. Ainsi, le compromis proposé par l'invention est encore plus intéressant, car un système de distribution de fluide alimentaire doit satisfaire à d'autant plus de contraintes d'une part que le nombre de points de dosage est élevé et d'autre part que la distance du point de dosage le plus éloigné augmente.

De préférence, les deux tronçons de tuyauterie sont reliés entre eux au niveau de plusieurs des dérivations d'alimentation respectives des points de dosage, de préférence au niveau de toutes les dérivations d'alimentation respectives des points de dosage. Ainsi, un nombre de points de dosage de plus en plus grand peut profiter de tous les avantages de la mise en oeuvre de l'invention, et ici en particulier profiter de la double alimentation simultanée en parallèle. Il reste toutefois possible de ne faire profiter de cette double alimentation simultanée en parallèle que certains des points de dosage, voire même qu'un seul de ces points de dosage, même si cela diminue l'intérêt global de la mise en oeuvre de l'invention.

De préférence, pour la deuxième et/ou la troisième configuration du jeu de vanne(s), la boucle de circulation de fluide alimentaire passant par la chambre réfrigérée est formée : d'une part par l'ouverture d'une première vanne reliant le tronçon de retour à la portion de tuyauterie allant à la chambre réfrigérée, d'autre part par la fermeture d'une deuxième vanne reliant le tronçon de retour à l'embranchement. Ainsi, la simple utilisation de deux vannes simples, ne présentant que deux états, ouverte ou fermée, suffit pour mettre en oeuvre le passage d'un mode alimentation en mode boucle, et vice-versa, que le mode boucle soit un mode boucle de rafraîchissement de fluide alimentaire, ou bien un mode boucle de récupération de fluide alimentaire, ou bien un mode boucle de circulation de fluide de nettoyage.

De préférence, pour la deuxième et/ou la troisième configuration du jeu de vanne(s), la boucle de circulation de fluide alimentaire passant par la chambre réfrigérée est formée par le changement d'état d'une vanne trois voies qui : d'une part ouvre le passage entre le tronçon de retour et la portion de tuyauterie allant à la chambre réfrigérée, d'autre part ferme le passage entre le tronçon de retour et l'embranchement. Ainsi, la simple utilisation d'une seule vanne trois voies, pouvant présenter théoriquement quatre états, dont ici seuls deux sont utilisés, première voie ouverte et deuxième voie fermée d'une part et première voie fermée et deuxième voie ouverte d'autre part, suffit pour mettre en oeuvre le passage d'un mode alimentation en mode boucle, et vice-versa, que le mode boucle soit un mode boucle de rafraîchissement de fluide alimentaire, ou bien un mode boucle de récupération de fluide alimentaire, ou bien un mode boucle de circulation de fluide de nettoyage.

De préférence, une sonde de température est située au niveau de la dérivation d'alimentation de point de dosage la plus éloignée de la chambre réfrigérée, un dépassement d'un seuil de température au niveau de cette sonde de température déclenche le passage de la première configuration du jeu de vanne(s) à la deuxième configuration du jeu de vanne(s), le seuil de température étant de préférence compris entre 1°C et 7°C, le seuil de température étant encore plus de préférence compris entre 2°C et 4°C. Cette sonde de température est très utile car sa présence va permettre d'optimiser la fréquence des opérations de rafraîchissement du fluide alimentaire, à chaque fois que nécessaire mais seulement lorsque nécessaire. Le point le plus critique du système de distribution étant la dérivation d'alimentation de point de dosage la plus éloignée de la chambre réfrigérée (ou son voisinage immédiat bien sûr), il faut et il suffit de placer une sonde de température à cet endroit pour pouvoir optimiser complètement la fréquence des opérations de rafraîchissement du fluide alimentaire.

De préférence, la même pompe de circulation fait circuler le fluide alimentaire ou l'eau de nettoyage dans la tuyauterie. Ainsi, le coût et la complexité du système global de distribution sont réduits, et le compromis proposé par l'invention en devient encore plus intéressant.

De préférence, la vitesse de circulation du fluide alimentaire reste inférieure à 0.7 m/s, de préférence inférieure à 0.5 m/s, la vitesse de circulation de l'eau de nettoyage reste supérieure à 1.5 m/s, de préférence supérieure à 2.0 m/s. C'est notamment cette différence de vitesse de circulation entre fluide alimentaire et fluide non alimentaire qui rend les contraintes de fonctionnement multimode difficiles à satisfaire par le système de distribution tout en évitant de le sur-dimensionner, et qui rend d'autant plus intéressant le compromis proposé par l'invention. Avantageusement, la vitesse de circulation du fluide alimentaire reste supérieure à 0.3 m/s, la vitesse de circulation de l'eau de nettoyage reste inférieure à 3 m/s.

De préférence, la pompe de circulation est une pompe volumétrique. Cette pompe volumétrique est préférentielle, car elle est plus adaptée à un fluide alimentaire fragile et même vivant, comme par exemple la levure liquide ou la crème de levure, dans la mesure où ce type de pompe va permettre un échauffement moindre et une moindre brutalisation de ce fluide alimentaire fragile et vivant. Une pompe centrifuge, ou même encore un autre type de pompe reste possible. Par ailleurs, une pompe volumétrique permettra aussi bien une pousse à l'eau qu'une pousse à l'air, du fluide alimentaire, tandis qu'une pompe centrifuge ne permettra qu'une pousse à l'eau et non pas une pousse à l'air, de ce fluide alimentaire.

De préférence, la longueur de la tuyauterie entre d'une part le réservoir de fluide alimentaire de la chambre réfrigérée et d'autre part le point de dosage le plus éloignée de la chambre réfrigérée est supérieure à 10m, de préférence supérieure à 20m, encore plus de préférence supérieure à 30m, et/ou inférieure à 100m, de préférence inférieure à 50m. D'une part, le compromis proposé par l'invention est d'autant plus intéressant que la tuyauterie est longue. D'autre part, une tuyauterie vraiment trop longue, tout en conservant son caractère intéressant au compromis proposé par l'invention, peut nécessiter tout de même d'autres modifications, comme un certain surdimensionnement de la pompe de circulation (même si celui-ci sera moindre que sans l'utilisation du procédé de distribution selon l'invention).

De préférence, le point de dosage est un pétrin ou les points de dosage sont des pétrins. Un point de dosage peut également être par exemple un point de dosage au pichet, utilisé en cas de défaillance des points de dosage au pétrin, ou pour des besoins ponctuels de faible volume de fluide alimentaire.

De préférence, le diamètre intérieur de la tuyauterie d'alimentation est compris entre 10 et 51mm, de préférence compris entre 19 et 38mm. Ces plages de diamètre permettent une bonne optimisation du dimensionnement du système de distribution de fluide alimentaire en fonction de la longueur totale de tuyauterie, en fonction du nombre de points de dosage, en fonction de la fréquence et de la cadence d'utilisation de l'installation, comme en fonction de la taille du réservoir de fluide alimentaire.

De préférence, le système de distribution de fluide alimentaire comprend un réservoir de fluide alimentaire dans la chambre réfrigérée et en ce que la capacité du réservoir de fluide alimentaire est comprise entre 100 litres et 1000 litres, de préférence comprise entre 100 litres et 600 litres ou entre 300 litres et 1000 litres, encore plus de préférence comprise entre 300 litres et 600 litres. En effet, le procédé de distribution de levure liquide et le système de distribution de levure liquide associé, présentent un compromis optimal entre efficacité et coût de revient, pour ce type de capacité intermédiaire correspondant à une boulangerie de taille moyenne.

Préférentiellement, au moins une partie d'un liquide enzymatique, aussi appelé « améliorant », améliorant le croustillant et ou le moelleux de la pâte, est aussi en circulation, avec la levure liquide, sur la majeure partie de la tuyauterie d'alimentation, avant de se déverser dans le pétrin. Le système de distribution de la levure liquide permet dans ce cas de conserver également, la plupart du temps, à température relativement basse, l'améliorant, et de ne le sortir de la chambre réfrigérée, qu'un court moment, juste avant son utilisation.

Préférentiellement, au moins plusieurs des points de dosage ou des pétrins, de préférence tous, partagent un même débitmètre et/ou une même vanne de levure reliée à un réservoir de levure dans la chambre réfrigérée et/ou une même vanne d'eau reliée à l'arrivée d'eau. Un débitmètre étant un élément coûteux, le partager diminue le coût global du système. Partager une même vanne de levure et/ou une même vanne d'eau simplifie la gestion de la circulation de levure liquide entre chambre réfrigérée et points de dosage, dans la mesure où le passage entre distribution et arrêt de la distribution, pour la levure liquide comme pour l'eau, s'effectue par la commande d'une seule vanne.

Préférentiellement, la pompe qui pousse la levure liquide dans la tuyauterie d'alimentation est située au niveau ou au voisinage de la chambre réfrigérée. Le débitmètre est également situé au niveau ou au voisinage de la chambre réfrigérée. La disposition de ces éléments à proximité des sources de fluide alimentaire poussé ou de levure liquide poussée, augmente la précision du dosage de fluide alimentaire ou de levure liquide, améliorant de ce fait la fiabilité globale du système de distribution de fluide alimentaire comme par exemple de levure liquide ou de crème de levure.

Dans une réalisation, après sa sortie de la chambre réfrigérée, au moins une partie du fluide alimentaire en circulation est poussée par de l'eau sur une partie de la tuyauterie d'alimentation, avant de se déverser dans le point de dosage.

Dans une réalisation, après sa sortie de la chambre réfrigérée, au moins une partie du fluide alimentaire en circulation est poussée par de l'air sur une partie de la tuyauterie d'alimentation, avant de se déverser dans le point de dosage.

Dans une réalisation, l'eau qui pousse le fluide alimentaire est à une pression d'au moins 2bars, de préférence d'au moins 3 bars, encore plus de préférence d'au moins 5 bars, et/ou le fluide alimentaire qui circule est à une pression d'au moins 2bars, de préférence d'au moins 3 bars, encore plus de préférence d'au moins 5 bars.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

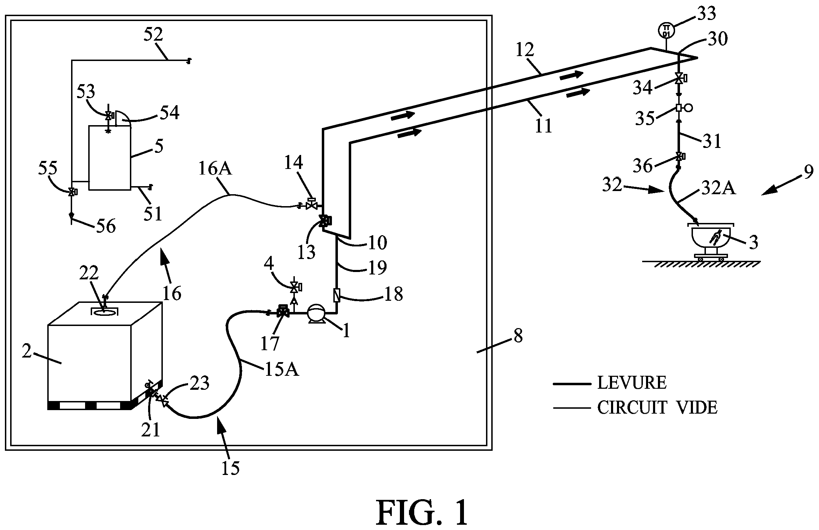

La figure 1 représente schématiquement un exemple d'un système de distribution de levure liquide en boulangerie selon un mode de réalisation de l'invention, correspondant à un mode de fonctionnement en soutirage de levure liquide, c'est-à-dire ici à un mode de fonctionnement en alimentation double simultanée en parallèle en levure liquide à un point de dosage.

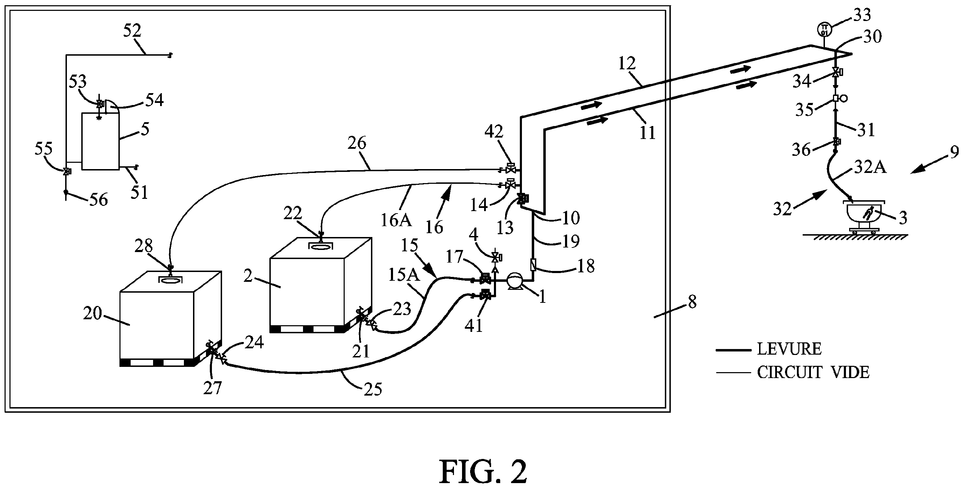

La figure 2 représente schématiquement un exemple d'un système de distribution de levure liquide en boulangerie selon un mode de réalisation de l'invention, correspondant à un mode de fonctionnement en soutirage de levure liquide, avec basculement entre deux réservoirs de levure liquide situés dans la chambre réfrigérée.

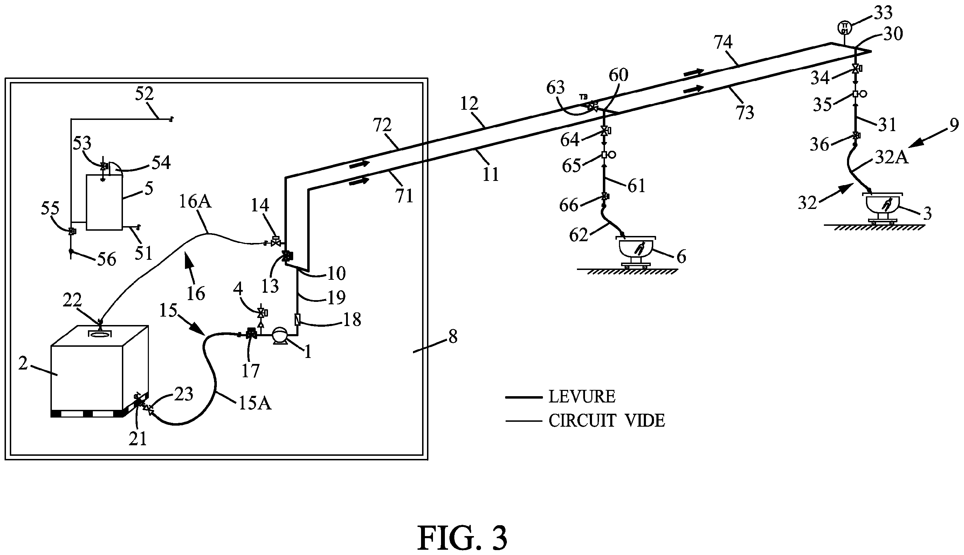

La figure 3 représente schématiquement un exemple d'un système de distribution de levure liquide en boulangerie selon un mode de réalisation de l'invention, correspondant à un mode de fonctionnement en soutirage de levure liquide, c'est-à-dire ici à un mode de fonctionnement en alimentation double simultanée en parallèle en levure liquide à plusieurs points de dosage respectivement situés à des distances différentes de la chambre réfrigérée.

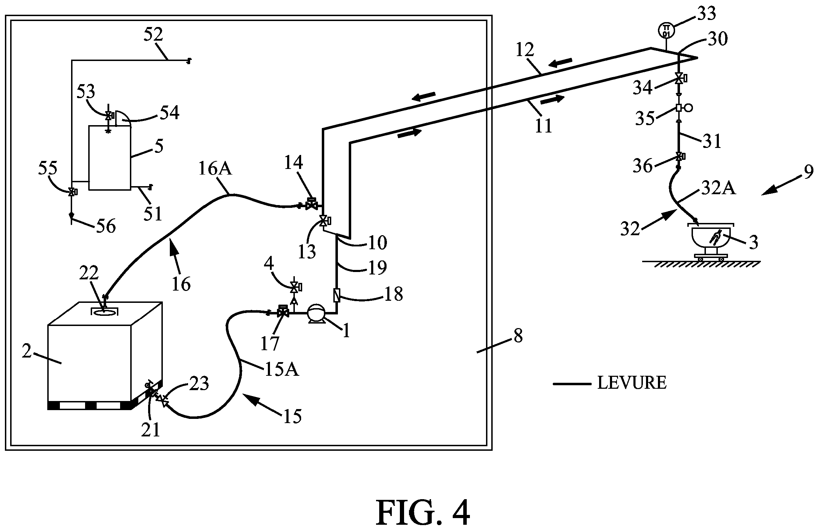

La figure 4 représente schématiquement un exemple d'un système de distribution de levure liquide en boulangerie selon un mode de réalisation de l'invention, correspondant à un mode de fonctionnement en rafraîchissement de levure liquide, c'est-à-dire à un mode de fonctionnement en boucle fermée de circulation de levure liquide.

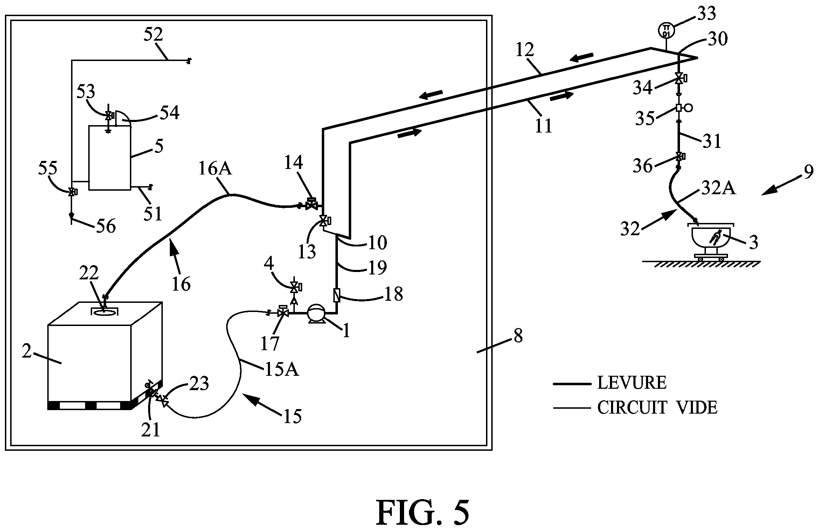

La figure 5 représente schématiquement un exemple d'un système de distribution de levure liquide en boulangerie selon un mode de réalisation de l'invention, correspondant à un mode de fonctionnement en récupération de levure liquide, c'est-à-dire à un mode de fonctionnement en boucle ouverte de circulation de levure liquide, en utilisant une arrivée d'eau située juste en amont de la pompe de circulation.

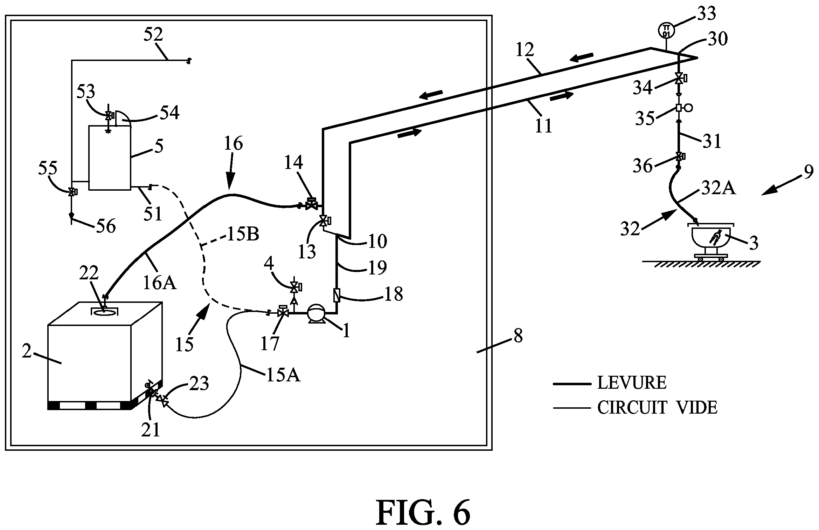

La figure 6 représente schématiquement un exemple d'un système de distribution de levure liquide en boulangerie selon un mode de réalisation de l'invention, correspondant à un mode de fonctionnement en récupération de levure liquide, c'est-à-dire à un mode de fonctionnement en boucle ouverte de circulation de levure liquide, mais en utilisant l'arrivée d'eau utilisée pour le nettoyage laquelle est déportée par rapport à la pompe de circulation.

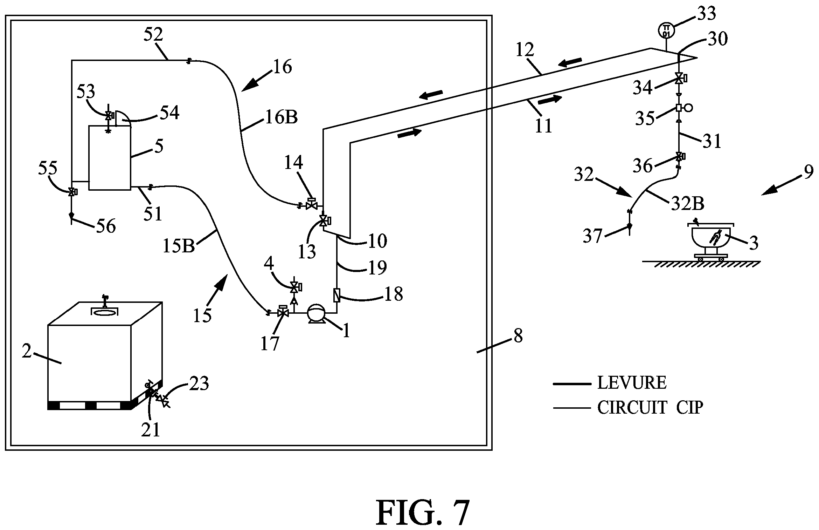

La figure 7 représente schématiquement un exemple d'un système de distribution de levure liquide en boulangerie selon un mode de réalisation de l'invention, correspondant à un mode de fonctionnement en nettoyage de la tuyauterie par circulation d'eau de nettoyage, c'est-à-dire à un mode de fonctionnement en boucle de circulation d'eau de nettoyage, fermée d'abord puis ouverte ensuite pour vidange de l'eau de nettoyage usagée, en utilisant l'arrivée d'eau de nettoyage qui est déportée par rapport à la pompe de circulation.

### DESCRIPTION DETAILLEE DE L'INVENTION

La figure 1 représente schématiquement un exemple d'un système de distribution de levure liquide en boulangerie selon un mode de réalisation de l'invention, correspondant à un mode de fonctionnement en soutirage de levure liquide, c'est-à-dire ici à un mode de fonctionnement en alimentation double simultanée en parallèle en levure liquide à un point de dosage.

La boulangerie comprend une chambre réfrigérée 8 et un fournil 9. La chambre réfrigérée 8 comprend au moins un réservoir 2 de levure liquide, éventuellement plusieurs réservoirs de levure liquide utilisés alternativement et successivement. La chambre réfrigérée 8 comprend également un dispositif de nettoyage 5. Le fournil 9 comprend au moins un point de dosage 3 qui arrive ici à l'intérieur d'un pétrin 3. Le système de distribution de levure liquide se trouve réparti pour partie dans la chambre réfrigérée 8 et pour partie dans le fournil 9. Le système de distribution de levure comprend au moins un pétrin 3, au moins un réservoir 2 de levure liquide, au moins une arrivée d'eau 4 ou bien une arrivée d'air 4, au moins un dispositif de nettoyage 5, une pompe de circulation 1, ainsi qu'un dispositif de distribution de levure liquide reliant entre eux ces différents éléments de manière à faire circuler dans le système de distribution aussi bien la levure liquide que l'eau de nettoyage.

Le réservoir 2 de levure liquide est situé dans la chambre réfrigérée 8. Le réservoir 2 comprend une sortie 21 en aval de laquelle est disposée une vanne 23 de sortie de réservoir et une entrée 22. La sortie 21 est reliée par la vanne 23 à un flexible 15 de soutirage représenté ici en position 15A de soutirage de levure liquide à partir du réservoir 2 pour alimenter en levure liquide le pétrin 3. L'entrée 22 est reliée directement à un flexible 16 de retour représenté ici en position 16A de retour de levure liquide vers le réservoir 2.

Le dispositif de distribution de levure liquide comprend une vanne 17 d'arrivée de levure liquide reliant le flexible 15 de soutirage à l'amont de la pompe 1 de circulation. Une vanne 4 d'arrivée d'eau ou d'arrivée d'air est également reliée à l'amont de la pompe 1 de circulation, en aval de la vanne 17 d'arrivée de levure liquide. La tuyauterie comprend un tronçon commun 19 qui relie l'aval de la pompe 1 de circulation à un embranchement 10. Ce tronçon commun 19 comprend un filtre 18. Au niveau de l'embranchement 10, la tuyauterie se sépare en deux parties, un tronçon 11 d'antenne et un tronçon 12 de retour, respectivement utilisés, dans ce mode de fonctionnement en soutirage de levure liquide, comme antenne primaire 11 et antenne secondaire 12. Les flèches en traits pleins représentent le sens de la circulation de la levure liquide dans la tuyauterie du système de distribution de levure liquide.

Le tronçon 11 d'antenne va directement jusqu'à une dérivation 30 au niveau de laquelle ou au voisinage de laquelle, soit sur le tronçon 11 d'antenne, soit sur le tronçon 12 de retour, est disposée une sonde de température 33 mesurant la température de la levure liquide au voisinage de la dérivation 30.

Le tronçon 12 de retour est relié au flexible 16 de retour par une vanne 14 de retour. Le tronçon 12 de retour est relié à l'embranchement 10 par une vanne 13 de transformation de boucle. La vanne 13 de transformation de boucle est située entre d'une part le point de rattachement du tronçon 12 de retour au flexible 16 de retour et d'autre part l'embranchement 10.

La tuyauterie comprend un tronçon 31 de dosage qui tombe verticalement de la dérivation 30 vers le pétrin 3 et qui est prolongé par un flexible de dosage 32, représenté ici en position de dosage 32A, qui tombe dans le pétrin 3. Le long du tronçon 31 de dosage, entre la dérivation 30 et le flexible de dosage 32, sont successivement situés une vanne 34 d'arrivée de levure liquide, un débitmètre 35 mesurant le débit de levure liquide à son niveau dans le tronçon 31 de dosage, une vanne 36 de dosage régulée dont l'ouverture progressive ou la fermeture sont régulées par l'intermédiaire de la valeur mesurée du débit de levure liquide par le débitmètre 35 et asservies sur une valeur de consigne demandée par l'utilisateur de ce pétrin 3. La vanne 34 d'arrivée de levure fonctionne au contraire en tout ou rien, elle est ouverte soit lors d'une phase d'alimentation du pétrin 3 en levure liquide, soit lors d'une phase de vidange du tronçon 31 de dosage, elle est fermée en dehors de ces deux phases. La hauteur du tronçon 31 vaut par exemple environ 5m et le diamètre du tronçon 31 vaut par exemple environ 25mm.

Le système de distribution de levure liquide comprend également un dispositif de nettoyage 5 situé dans la chambre réfrigérée 8. Le dispositif de nettoyage 5 reçoit une vanne 53 d'arrivée d'eau de nettoyage, une arrivée 54 de détergent, envoie de l'eau de nettoyage (pouvant intégrer du détergent ou non) par son antenne de nettoyage 51, récupère l'eau de nettoyage après usage par son retour de nettoyage 52. Cette eau de nettoyage peut soit être recyclée pour servir à nouveau et être renvoyée par l'antenne de nettoyage 51 si la vanne 55, qui fonctionne en tout ou rien, est fermée, soit être évacuée par l'évacuation de nettoyage 56, si la vanne 56 est ouverte. Dans le mode de soutirage de levure liquide, le dispositif 5 de nettoyage est déconnecté du reste du système de distribution de levure liquide.

Dans le mode de soutirage de levure liquide, la vanne 23 de sortie de réservoir, la vanne 17 d'arrivée de levure liquide, la vanne 13 de transformation de boucle, et la vanne 34 d'arrivée de levure, fonctionnant en tout ou rien, sont toutes ouvertes. La vanne de dosage 36 est partiellement ouverte ou totalement ouverte ou totalement fermée, son degré d'ouverture dépendant de la consigne de débit de levure liquide de l'utilisateur du pétrin 3. L'ouverture de la vanne 13 de transformation de boucle va avoir pour conséquences d'une part l'absence de boucle et d'autre part la double alimentation simultanée et en parallèle du pétrin 3 en levure liquide.

Dans ce même mode de soutirage de levure liquide, la vanne 4 d'arrivée d'eau, la vanne 14 de retour, la vanne 53 d'arrivée d'eau de nettoyage, et la vanne 55 d'évacuation d'eau de nettoyage, fonctionnant en tout ou rien, sont toutes fermées. La fermeture de la vanne 14 de retour empêche la création d'une boucle et empêche toute circulation dans le flexible 16 de retour, que ce soit de levure liquide ou d'eau de nettoyage.

Dans ce même mode de soutirage de levure liquide, dans le flexible 15 de soutirage, en position 15A de soutirage de levure liquide, circule de la levure liquide en provenance du réservoir 2 et en direction de l'embranchement 10. Rien ne circule dans le flexible 16 de retour, en position de retour 16A.

Dans ce même mode de soutirage de levure liquide, la levure liquide en provenance du flexible 15 de soutirage, traverse la pompe 1 de circulation pour être envoyée dans le tronçon commun 19 par cette pompe 1 de circulation, et pour traverser le filtre 18, avant d'arriver à l'embranchement 10.

Arrivée au niveau de l'embranchement 10, puisque la vanne 13 de transformation de boucle est ouverte, la levure liquide se divise en deux portions, circulant en direction de la dérivation 30 respectivement dans le tronçon 11 d'antenne utilisé ici comme antenne primaire et dans le tronçon 12 de retour utilisé ici comme antenne secondaire, alimentant, simultanément et en parallèle, le pétrin 3 par l'intermédiaire de la dérivation 30.

Arrivée au niveau de la dérivation 30, puisque la vanne 34 d'arrivée de levure est ouverte et puisque la vanne 36 de dosage est au moins partiellement ouverte, la levure liquide circule d'abord dans le tronçon 31 de dosage, circule ensuite dans le flexible 32 de dosage, en position 32A de dosage, pour arriver dans le pétrin 3.

La figure 2 représente schématiquement un exemple d'un système de distribution de levure liquide en boulangerie selon un mode de réalisation de l'invention, correspondant à un mode de fonctionnement en soutirage de levure liquide, avec basculement entre deux réservoirs de levure liquide situés dans la chambre réfrigérée. Les flèches en traits pleins représentent le sens de la circulation de la levure liquide dans la tuyauterie du système de distribution de levure liquide.

Le basculement entre les deux réservoirs peut être réalisé de manière automatique ou non, de préférence de manière automatique afin d'assurer au mieux la continuité d'alimentation des points de dosage en levure.

Le réservoir 2 de levure liquide est situé dans la chambre réfrigérée 8. Le réservoir 2 comprend une sortie 21 en aval de laquelle est disposée une vanne 23 de sortie de réservoir et une entrée 22. La sortie 21 est reliée par la vanne 23 à un flexible 15 de soutirage représenté ici en position 15A de soutirage de levure liquide à partir du réservoir 2 pour alimenter en levure liquide le pétrin 3. L'entrée 22 est reliée directement à un flexible 16 de retour représenté ici en position 16A de retour de levure liquide vers le réservoir 2.

Un autre réservoir 20 de levure liquide est situé dans la chambre réfrigérée 8. Cet autre réservoir 20 comprend une sortie 27 en aval de laquelle est disposée une vanne 24 de sortie de réservoir et une entrée 28. La sortie 27 est reliée par la vanne 24 à un flexible 25 de soutirage représenté ici en position de soutirage de levure liquide à partir du réservoir 20 pour alimenter en levure liquide le pétrin 3. L'entrée 28 est reliée directement à un flexible 26 de retour représenté ici en position de retour de levure liquide vers le réservoir 20.

Le dispositif de distribution de levure liquide comprend une vanne 17 d'arrivée de levure liquide reliant le flexible 15 de soutirage à l'amont de la pompe 1 de circulation. Le dispositif de distribution de levure liquide comprend également une vanne 41 d'arrivée de levure liquide reliant le flexible 25 de soutirage à l'amont de la pompe 1 de circulation. Une vanne 4 d'arrivée d'eau ou d'arrivée d'air est également reliée à l'amont de la pompe 1 de circulation, en aval de la vanne 17 d'arrivée de levure liquide ainsi qu'en aval de la vanne 41 d'arrivée de levure liquide. Au niveau de l'embranchement 10, la tuyauterie se sépare en deux parties, un tronçon 11 d'antenne et un tronçon 12 de retour, respectivement utilisés, dans ce mode de fonctionnement en soutirage de levure liquide, comme antenne primaire 11 et antenne secondaire 12.

La levure liquide circule, entre l'aval de la pompe 1 de circulation et le pétrin 3, de la même manière qu'au niveau de la figure 1.

Le système de distribution de levure liquide reste dans le même état qu'au niveau de la figure 1.

Dans le mode de soutirage de levure liquide, dans un premier temps, la vanne 23 de sortie de réservoir, la vanne 17 d'arrivée de levure liquide, la vanne 13 de transformation de boucle, et la vanne 34 d'arrivée de levure, fonctionnant en tout ou rien, sont toutes ouvertes. La vanne de dosage 36 est partiellement ouverte ou totalement ouverte ou totalement fermée, son degré d'ouverture dépendant de la consigne de débit de levure liquide de l'utilisateur du pétrin 3. L'ouverture de la vanne 13 de transformation de boucle va avoir pour conséquences d'une part l'absence de boucle et d'autre part la double alimentation simultanée et en parallèle du pétrin 3 en levure liquide.

Dans ce même mode de soutirage de levure liquide, la vanne 4 d'arrivée d'eau, la vanne 14 de retour, la vanne 53 d'arrivée d'eau de nettoyage, et la vanne 55 d'évacuation d'eau de nettoyage, la vanne 24 de sortie de réservoir, la vanne 41 d'arrivée de levure liquide, et la vanne 42 de retour, fonctionnant en tout ou rien, sont toutes fermées. La fermeture de la vanne 14 de retour empêche la création d'une boucle et empêche toute circulation dans le flexible 16 de retour, que ce soit de levure liquide ou d'eau de nettoyage. La fermeture de la vanne 42 de retour empêche la création d'une boucle et empêche toute circulation dans le flexible 26 de retour, que ce soit de levure liquide ou d'eau de nettoyage.

Dans ce même mode de soutirage de levure liquide, dans le flexible 15 de soutirage, en position 15A de soutirage de levure liquide, circule de la levure liquide en provenance du réservoir 2 et en direction de l'embranchement 10. Rien ne circule dans le flexible 16 de retour, en position de retour 16A. Rien ne circule non plus dans le flexible 26 de retour, en position de retour. Rien ne circule non plus dans le flexible 25 de soutirage, en position de soutirage.

Dans ce même mode de soutirage de levure liquide, la levure liquide en provenance du flexible 15 de soutirage, traverse la pompe 1 de circulation pour être envoyée dans le tronçon commun 19 par cette pompe 1 de circulation, et pour traverser le filtre 18, avant d'arriver à l'embranchement 10.

Une fois que réservoir 2 de levure liquide a été complètement vidé, la vanne 23 de sortie de réservoir et la vanne 17 d'arrivée de levure liquide qui étaient ouvertes, deviennent fermées. Le réservoir 2 vide est retiré pour être remplacé par un nouveau réservoir 2 rempli de levure liquide. En variante, ce réservoir 2 vide est retiré pour être à nouveau rempli de levure liquide et pour être ensuite remis en place. En variante, dans le cas de l'utilisation d'une cuve réfrigérée, celle-ci peut être simplement nettoyée et remplie de nouveau avec de la levure liquide. Ceci permet notamment d'éviter les ruptures d'alimentation en levure liquide des points de dosage.

Dans le mode de soutirage de levure liquide, dans un deuxième temps, la vanne 24 de sortie de réservoir et la vanne 41 d'arrivée de levure liquide, qui étaient fermées, deviennent ouvertes, et la vanne 23 de sortie de réservoir et la vanne 17 d'arrivée de levure liquide, qui étaient ouvertes, deviennent fermées. La vanne 13 de transformation de boucle, et la vanne 34 d'arrivée de levure, fonctionnant en tout ou rien, restent ouvertes. La vanne de dosage 36 est partiellement ouverte ou totalement ouverte ou totalement fermée, son degré d'ouverture dépendant de la consigne de débit de levure liquide de l'utilisateur du pétrin 3. L'ouverture de la vanne 13 de transformation de boucle va avoir pour conséquences d'une part l'absence de boucle et d'autre part la double alimentation simultanée et en parallèle du pétrin 3 en levure liquide.

Dans ce même mode de soutirage de levure liquide, la vanne 4 d'arrivée d'eau, la vanne 14 de retour, la vanne 53 d'arrivée d'eau de nettoyage, et la vanne 55 d'évacuation d'eau de nettoyage, et la vanne 42 de retour, fonctionnant en tout ou rien, restent fermées. La fermeture de la vanne 14 de retour empêche la création d'une boucle et empêche toute circulation dans le flexible 16 de retour, que ce soit de levure liquide ou d'eau de nettoyage. La fermeture de la vanne 42 de retour empêche la création d'une boucle et empêche toute circulation dans le flexible 26 de retour, que ce soit de levure liquide ou d'eau de nettoyage.

Dans ce même mode de soutirage de levure liquide, dans le flexible 25 de soutirage, en position de soutirage de levure liquide, circule de la levure liquide en provenance du réservoir 20 et en direction de l'embranchement 10. Rien ne circule dans le flexible 16 de retour, en position de retour 16A. Rien ne circule non plus dans le flexible 26 de retour, en position de retour. Rien ne circule non plus dans le flexible 15 de soutirage, en position 15A de soutirage.

Dans ce même mode de soutirage de levure liquide, la levure liquide en provenance du flexible 25 de soutirage, traverse la pompe 1 de circulation pour être envoyée dans le tronçon commun 19 par cette pompe 1 de circulation, et pour traverser le filtre 18, avant d'arriver à l'embranchement 10.

Une fois que réservoir 20 de levure liquide a été complètement vidé, la vanne 24 de sortie de réservoir et la vanne 41 d'arrivée de levure liquide qui étaient ouvertes, deviennent fermées. Le réservoir 20 vide est retiré pour être remplacé par un nouveau réservoir 20 rempli de levure liquide. En variante, ce réservoir 20 vide est retiré pour être à nouveau rempli de levure liquide et pour être ensuite remis en place. Ensuite, la distribution de levure liquide peut à nouveau reprendre en provenance du réservoir 2, par l'ouverture de la vanne 23 de sortie de réservoir et de la vanne 17 d'arrivée de levure liquide qui étaient fermées. Ceci permet notamment d'éviter les ruptures d'alimentation en levure liquide des points de dosage.

La figure 3 représente schématiquement un exemple d'un système de distribution de levure liquide en boulangerie selon un mode de réalisation de l'invention, correspondant à un mode de fonctionnement en soutirage de levure liquide, c'est-à-dire ici à un mode de fonctionnement en alimentation double simultanée en parallèle en levure liquide à plusieurs points de dosage respectivement situés à des distances différentes de la chambre réfrigérée. Les flèches en traits pleins représentent le sens de la circulation de la levure liquide dans la tuyauterie du système de distribution de levure liquide.

Le réservoir 2 de levure liquide est situé dans la chambre réfrigérée 8 et disposé de la même manière que sur la figure 1.

Au niveau de l'embranchement 10, la tuyauterie se sépare en deux parties, un tronçon 11 d'antenne et un tronçon 12 de retour, respectivement utilisés, dans ce mode de fonctionnement en soutirage de levure liquide, comme antenne primaire 11 et antenne secondaire 12.

Le tronçon 11 d'antenne, utilisé, dans ce mode de fonctionnement en soutirage de levure liquide, comme antenne primaire 11, comprend une première portion 71 jusqu'à une dérivation intermédiaire 60, puis une deuxième portion 73 jusqu'à la dérivation finale 30.

Le tronçon 12 de retour, utilisé, dans ce mode de fonctionnement en soutirage de levure liquide, comme antenne secondaire 12, comprend une première portion 72 jusqu'à une dérivation intermédiaire 60, puis une deuxième portion 74 jusqu'à la dérivation finale 30. Entre la dérivation intermédiaire 60 et la dérivation finale 30 est disposée une vanne complémentaire 63 de transformation de boucle qui fonctionne en tout ou rien. Cette vanne complémentaire 63 de transformation de boucle est ouverte en mode de fonctionnement en soutirage, permettant ainsi la double alimentation en levure liquide simultanée et en parallèle d'un point de dosage intermédiaire 6 relié à la dérivation intermédiaire 60, et empêchant ainsi également la formation d'une boucle de circulation. Mais cette vanne complémentaire 63 de transformation de boucle sera par contre fermée, tout comme la vanne 64 d'arrivée de levure liquide du point de dosage intermédiaire 6, pour tous les modes de fonctionnement avec une boucle de circulation, et en particulier les modes de fonctionnement en rafraîchissement, en récupération, et en nettoyage. La vanne complémentaire 63 de transformation de boucle et la vanne 64 d'arrivée de levure liquide du point de dosage peuvent être amenées à fonctionner en intermittence lors des étapes de lavage pendant le nettoyage.

La première portion 71 du tronçon 11 d'antenne va directement jusqu'à une dérivation intermédiaire 60, puis la deuxième portion 73 du tronçon 11 d'antenne prolonge cette première portion 71 pour aller de la dérivation intermédiaire 60 jusqu'à la dérivation finale 30 au niveau de laquelle ou au voisinage de laquelle, soit sur le tronçon 11 d'antenne, soit sur le tronçon 12 de retour est disposée une sonde de température 33 mesurant la température de la levure liquide au voisinage de la dérivation finale 30.

La première portion 72 du tronçon 12 de retour va directement jusqu'à une dérivation intermédiaire 60, puis la deuxième portion 74 du tronçon 12 de retour prolonge cette première portion 72 pour aller de la dérivation intermédiaire 60 jusqu'à la dérivation finale 30.

La première portion 72 du tronçon 12 de retour est reliée au flexible 16 de retour par une vanne 14 de retour. La première portion 72 du tronçon 12 de retour est reliée à l'embranchement 10 par une vanne 13 de transformation de boucle. La vanne 13 de transformation de boucle est située entre d'une part le point de rattachement de la première portion 72 du tronçon 12 de retour au flexible 16 de retour et d'autre part l'embranchement 10.

La tuyauterie comprend un tronçon 61 de dosage qui tombe verticalement de la dérivation intermédiaire 60 vers le pétrin 6 et prolongé par un flexible de dosage 62 représenté ici en position de dosage qui tombe dans le pétrin 6. Le long du tronçon 61 de dosage, entre la dérivation intermédiaire 60 et le flexible de dosage 62, sont successivement situés une vanne 64 d'arrivée de levure liquide, un débitmètre 65 mesurant le débit de levure liquide à son niveau dans le tronçon 61 de dosage, une vanne 66 de dosage régulée dont l'ouverture progressive ou la fermeture sont régulées par l'intermédiaire de la valeur mesurée du débit de levure liquide par le débitmètre 65 et asservies sur une valeur de consigne demandée par l'utilisateur de ce pétrin 6. La vanne 64 d'arrivée de levure fonctionne au contraire en tout ou rien, elle est ouverte soit lors d'une phase d'alimentation du pétrin 6 en levure liquide, soit lors d'une phase de vidange du tronçon 61 de dosage, elle est fermée en dehors de ces deux phases.

La tuyauterie comprend également un tronçon 31 de dosage qui tombe verticalement de la dérivation finale 30 vers le pétrin 3 et qui est prolongé par un flexible de dosage 32 représenté ici en position de dosage 32A qui tombe dans le pétrin 3. Le long du tronçon 31 de dosage, entre la dérivation finale 30 et le flexible de dosage 32, sont successivement situés une vanne 34 d'arrivée de levure liquide, un débitmètre 35 mesurant le débit de levure liquide à son niveau dans le tronçon 31 de dosage, une vanne 36 de dosage régulée dont l'ouverture progressive ou la fermeture sont régulées par l'intermédiaire de la valeur mesurée du débit de levure liquide par le débitmètre 35 et asservies sur une valeur de consigne demandée par l'utilisateur de ce pétrin 3. La vanne 34 d'arrivée de levure fonctionne au contraire en tout ou rien, elle est ouverte soit lors d'une phase d'alimentation du pétrin 3 en levure liquide, soit lors d'une phase de vidange du tronçon 31 de dosage, elle est fermée en dehors de ces deux phases.

Le système de distribution de levure liquide comprend également un dispositif de nettoyage 5 situé dans la chambre réfrigérée 8 disposé de la même manière qu'à la figure 1.

Dans le mode de soutirage de levure liquide, la vanne 64 d'arrivée de levure et la vanne 34 d'arrivée de levure, fonctionnant en tout ou rien, sont toutes ouvertes. La vanne de dosage 66 est partiellement ouverte ou totalement ouverte ou totalement fermée, son degré d'ouverture dépendant de la consigne de débit de levure liquide de l'utilisateur du pétrin 6. La vanne de dosage 36 est partiellement ouverte ou totalement ouverte ou totalement fermée, son degré d'ouverture dépendant de la consigne de débit de levure liquide de l'utilisateur du pétrin 3. L'ouverture de la vanne 13 de transformation de boucle va avoir pour conséquences d'une part l'absence de boucle et d'autre part la double alimentation simultanée et en parallèle du pétrin 3 en levure liquide.

Entre le réservoir 2 de levure liquide et l'embranchement 10 de la tuyauterie, le système de distribution de levure liquide fonctionne de la même manière qu'au niveau de la figure 1.

Arrivée au niveau de l'embranchement 10, puisque la vanne 13 de transformation de boucle est ouverte, la levure liquide se divise en deux parties, la première partie circulant en direction d'abord de la dérivation intermédiaire 60, puis de la dérivation finale 30 respectivement d'abord dans la première portion 71 du tronçon 11 d'antenne puis dans la deuxième portion 73 du tronçon 11 d'antenne, ce tronçon 11 d'antenne étant utilisé ici comme antenne primaire, et la deuxième partie circulant en direction d'abord de la dérivation intermédiaire 60, puis de la dérivation finale 30 respectivement d'abord dans la première portion 72 du tronçon 12 de retour d'antenne puis dans la deuxième portion 74 du tronçon 12 de retour, ce tronçon 12 de retour étant utilisé ici comme antenne secondaire. Le tronçon 11 d'antenne utilisé ici comme antenne primaire et le tronçon 12 de retour utilisé ici comme antenne secondaire, alimentent, simultanément et en parallèle, d'abord le pétrin 6 par l'intermédiaire de la dérivation intermédiaire 6, puis le pétrin 3 par l'intermédiaire de la dérivation finale 30.

Arrivée au niveau de la dérivation intermédiaire 60, puisque la vanne 64 d'arrivée de levure est ouverte et puisque la vanne 66 de dosage est au moins partiellement ouverte, la levure liquide circule d'abord dans le tronçon 61 de dosage, circule ensuite dans le flexible 62 de dosage, en position de dosage, pour arriver dans le pétrin 6.

Arrivée au niveau de la dérivation finale 30, puisque la vanne 34 d'arrivée de levure est ouverte et puisque la vanne 36 de dosage est au moins partiellement ouverte, la levure liquide circule d'abord dans le tronçon 31 de dosage, circule ensuite dans le flexible 32 de dosage, en position 32A de dosage, pour arriver dans le pétrin 3.

La figure 4 représente schématiquement un exemple d'un système de distribution de levure liquide en boulangerie selon un mode de réalisation de l'invention, correspondant à un mode de fonctionnement en rafraîchissement de levure liquide, c'est-à-dire à un mode de fonctionnement en boucle fermée de circulation de levure liquide. Les flèches en traits pleins représentent le sens de la circulation de la levure liquide dans la tuyauterie du système de distribution de levure liquide. A titre indicatif, une opération de rafraîchissement peut être réalisée toutes les 2 à 3 heures par exemple.

Le réservoir 2 de levure liquide est situé dans la chambre réfrigérée 8. La partie du réservoir 2 située entre d'une part sa sortie 21 et d'autre part l'embranchement 10 est disposée et fonctionne de la même manière qu'à la figure 1. L'entrée 22 est reliée directement à un flexible 16 de retour représenté ici en position 16A de retour de levure liquide vers le réservoir 2.

Au niveau de l'embranchement 10, la tuyauterie se sépare en deux parties, un tronçon 11 d'antenne et un tronçon 12 de retour, respectivement utilisés, dans ce mode de fonctionnement en rafraîchissement de levure liquide, comme partie aller de la boucle de circulation de levure liquide provenant de la sortie 21 du réservoir 2 et comme partie retour de la boucle de circulation de levure liquide retournant à l'entrée 22 du réservoir 2. Ainsi, de la levure liquide réchauffée par un séjour prolongé dans la tuyauterie peut être remplacée, et même peut être régulièrement remplacée, par de la levure fraîche directement issue du réservoir 2 situé au frais dans la chambre réfrigérée 8. La levure liquide réchauffée arrivant par l'entrée 22 du réservoir 2 se déverse dans la partie haute du réservoir 2, tandis que la levure liquide fraîche sortant par la sortie 21 est aspirée par la pompe 1 de circulation hors de la partie basse du réservoir 2.

Le tronçon 11 d'antenne va directement jusqu'à une dérivation 30 au niveau de laquelle ou au voisinage de laquelle, soit sur le tronçon 11 d'antenne, soit sur le tronçon 12 de retour est disposée une sonde de température 33 mesurant la température de la levure liquide au voisinage de la dérivation 30. En cas de dépassement d'un seuil haut de température, le mode de fonctionnement en rafraîchissement est activé, et la boucle de circulation de levure liquide tourne pendant un certain temps, le temps que toute la levure réchauffée présente dans la tuyauterie ait été remplacée par de la levure fraîche provenant du réservoir 2 en chambre réfrigérée 8.

Le tronçon 12 de retour est relié au flexible 16 de retour par une vanne 14 de retour. Le tronçon 12 de retour est relié à l'embranchement 10 par une vanne 13 de transformation de boucle. La vanne 13 de transformation de boucle est située entre d'une part le point de rattachement du tronçon 12 de retour au flexible 16 de retour et d'autre part l'embranchement 10.

La tuyauterie comprend un tronçon 31 de dosage qui tombe verticalement de la dérivation 30 vers le pétrin 3 de la même manière qu'à la figure 1. La vanne 34 d'arrivée de levure fonctionnant en tout ou rien est fermée de manière à empêcher la levure liquide circulant en boucle de dériver vers le pétrin 3.

Le système de distribution de levure liquide comprend également un dispositif de nettoyage 5 qui est situé dans la chambre réfrigérée 8 et qui est disposé de la même manière qu'à la figure 1.

Dans le mode de rafraîchissement de levure liquide, la vanne 23 de sortie de réservoir, la vanne 17 d'arrivée de levure liquide, la vanne 14 de retour, fonctionnant en tout ou rien, sont toutes ouvertes. L'état d'ouverture de la vanne de dosage 36 est indifférent dans la mesure où la vanne 34 d'arrivée de levure liquide est fermée.

Dans ce même mode de rafraîchissement de levure liquide, la vanne 4 d'arrivée d'eau, la vanne 13 de transformation de boucle, et la vanne 34 d'arrivée de levure, la vanne 53 d'arrivée d'eau de nettoyage, et la vanne 55 d'évacuation d'eau de nettoyage, fonctionnant en tout ou rien, sont toutes fermées.

L'ouverture de la vanne 14 de retour et la fermeture de la vanne 13 de transformation de boucle vont avoir pour conséquences d'une part la présence d'une boucle de circulation de levure liquide depuis le réservoir 2 jusqu'au point de dérivation 30 pour la partie aller de la boucle, puis depuis le point de dérivation 30 jusqu'au réservoir 2 pour la partie retour de la boucle. L'ouverture de la vanne 14 de retour permettant la création d'une boucle va envoyer la levure liquide, lors de son retour, circuler dans le flexible 16 de retour.

Dans ce même mode de rafraîchissement de levure liquide, dans le flexible 15 de soutirage, en position 15A de soutirage de levure liquide, circule de la levure liquide fraîche en provenance du réservoir 2 et en direction de l'embranchement 10. De manière similaire, de la levure liquide réchauffée circule dans le flexible 16 de retour, en position de retour 16A, vers le réservoir 2.

Dans ce même mode de rafraîchissement de levure liquide, la levure liquide en provenance du flexible 15 de soutirage, traverse la pompe 1 de circulation pour être envoyée dans le tronçon commun 19 par cette pompe 1 de circulation, et pour traverser le filtre 18, avant d'arriver à l'embranchement 10.

Arrivée au niveau de l'embranchement 10, puisque la vanne 13 de transformation de boucle est fermée, toute la levure liquide circule en direction de la dérivation 30 respectivement dans le tronçon 11 d'antenne utilisé ici comme partie aller de boucle puis revient dans le tronçon 12 de retour utilisé ici comme partie retour de boucle, pour ensuite réintégrer le réservoir 2, sans descendre dans le pétrin 3 lorsqu'elle arrive au niveau de la dérivation 30, puisque la vanne 34 d'arrivée de levure est fermée.

La figure 5 représente schématiquement un exemple d'un système de distribution de levure liquide en boulangerie selon un mode de réalisation de l'invention, correspondant à un mode de fonctionnement en récupération de levure liquide, c'est-à-dire à un mode de fonctionnement en boucle ouverte de circulation de levure liquide, en utilisant une arrivée d'eau située juste en amont de la pompe de circulation. Les flèches en traits pleins représentent d'abord le sens de la circulation de la levure liquide poussée par de l'eau ou de l'air dans la tuyauterie du système de distribution de levure liquide, puis le sens de la circulation de l'eau ou de l'air qui a poussé la levure liquide récupérée dans le réservoir de levure liquide du système de distribution de levure liquide.

Le réservoir 2 de levure liquide est situé dans la chambre réfrigérée 8. La partie du réservoir 2 située entre d'une part sa sortie 21 et d'autre part l'embranchement 10 est disposée et fonctionne de la même manière qu'à la figure 1. L'entrée 22 est reliée directement à un flexible 16 de retour représenté ici en position 16A de retour de levure liquide vers le réservoir 2.

Dans ce même mode de récupération de levure liquide, dans le flexible 15 de soutirage, en position 15A de soutirage de levure liquide, rien ne circule en provenance du réservoir 2, car d'une part la vanne 21 de sortie du réservoir 2 est fermée, et d'autre part la vanne 17 d'arrivée de levure liquide est également fermée.

Dans ce même mode de récupération de levure liquide, dans le flexible 16 de retour, en position 16A de retour de levure liquide, de la levure liquide poussée par de l'eau ou de l'air circule en provenance du tronçon 12 de retour de la tuyauterie, pour être récupérée dans le réservoir 2, car d'une part la vanne 22 d'entrée du réservoir 2 est ouverte et d'autre part la vanne 14 de retour est également ouverte, la vanne 13 de transformation de boucle étant quant à elle fermée.

Dans ce même mode de récupération de levure liquide, de l'eau ou de l'air en provenance de l'arrivée d'eau ou d'air, la vanne 4 d'arrivée d'eau ou d'air étant ouverte, l'eau ou l'air aspiré(e) par la pompe 1 de circulation pousse la levure liquide hors du tronçon commun 19 dans le tronçon 11 aller de boucle.

Au niveau de l'embranchement 10, la tuyauterie se sépare en deux parties, un tronçon 11 d'antenne et un tronçon 12 de retour, respectivement utilisés, dans ce mode de fonctionnement en récupération de levure liquide, comme partie aller de la boucle de circulation de levure liquide poussée par de l'eau ou de l'air fourni(e) par l'arrivée d'eau ou d'air, la vanne 4 d'arrivée d'eau ou d'air étant ouverte, et comme partie retour de la boucle de circulation de levure liquide poussée par de l'eau ou de l'air et retournant à l'entrée 22 du réservoir 2. Ainsi, de la levure liquide située dans la tuyauterie peut être récupérée dans le réservoir 2 situé en chambre réfrigérée 8. La levure liquide à récupérer arrivant par l'entrée 22 du réservoir 2 se déverse dans la partie haute du réservoir 2. Une fois toute la levure liquide récupérée, l'eau ou l'air de pousse peut être évacuée par le flexible 16 extrait du réservoir 2 et dirigé vers une évacuation non représentée sur la figure 5.

La boucle de circulation de la levure liquide poussée par de l'eau ou de l'air dans ce mode de récupération de levure liquide est la même que la boucle de circulation de la levure liquide seule dans le mode de rafraîchissement de la levure liquide présenté à la figure 4, à la différence près que cette boucle de circulation en récupération est une boucle ouverte, tandis que la boucle de circulation en rafraîchissement de la figure 4 était une boucle fermée, et que de l'eau pousse la levure liquide dans la boucle de circulation au lieu de n'avoir que de la levure liquide dans cette boucle de circulation.

Les tronçons 11 d'antenne et 12 de retour ainsi que le tronçon 31 au niveau de la dérivation 30 vers le pétrin 3, sont disposés et fonctionnent de la même manière qu'à la figure 4, à partir de l'embranchement 10. Ici, le passage en mode récupération après un mode soutirage par exemple est déclenché par l'arrêt de fonctionnement du système de distribution de levure liquide, par exemple en fin de journée jusqu'au lendemain matin pour les boulangeries de petite taille, ou par exemple en fin de semaine jusqu'au début de semaine suivante pour les boulangeries de taille intermédiaire.

Le système de distribution de levure liquide comprend également un dispositif de nettoyage 5 qui est situé dans la chambre réfrigérée 8 et qui est disposé de la même manière qu'à la figure 1.

Dans le mode de récupération de levure liquide, la vanne 4 d'arrivée d'eau, et la vanne 14 de retour, fonctionnant en tout ou rien, sont toutes ouvertes. L'état d'ouverture de la vanne de dosage 36 est indifférent dans la mesure où la vanne 34 d'arrivée de levure liquide est fermée.

Dans ce même mode de récupération de levure liquide, la vanne 13 de transformation de boucle, la vanne 17 d'arrivée de levure liquide, la vanne 23 de sortie de réservoir, la vanne 34 d'arrivée de levure, la vanne 53 d'arrivée d'eau de nettoyage, et la vanne 55 d'évacuation d'eau de nettoyage, fonctionnant en tout ou rien, sont toutes fermées.

L'ouverture de la vanne 14 de retour et la fermeture de la vanne 13 de transformation de boucle vont avoir pour conséquences d'une part la présence d'une boucle de circulation de levure liquide poussée par de l'eau ou de l'air depuis la vanne 14 ouverte d'arrivée d'eau ou d'air jusqu'au point de dérivation 30 pour la partie aller de la boucle, puis depuis le point de dérivation 30 jusqu'au réservoir 2 pour la partie retour de la boucle. L'ouverture de la vanne 14 de retour permettant la création d'une boucle va envoyer la levure liquide poussée par l'eau ou l'air, lors de son retour, circuler dans le flexible 16 de retour, jusqu'à réintégrer le réservoir 2.

La figure 6 représente schématiquement un exemple d'un système de distribution de levure liquide en boulangerie selon un mode de réalisation de l'invention, correspondant à un mode de fonctionnement en récupération de levure liquide, c'est-à-dire à un mode de fonctionnement en boucle ouverte de circulation de levure liquide, mais en utilisant l'arrivée d'eau utilisée pour le nettoyage laquelle est déportée par rapport à la pompe de circulation. Les flèches en traits pleins représentent d'abord le sens de la circulation de la levure liquide poussée par de l'eau ou de l'air dans la tuyauterie du système de distribution de levure liquide, puis le sens de la circulation de l'eau ou de l'air qui a poussé la levure liquide récupérée dans le réservoir de levure liquide du système de distribution de levure liquide. Il serait également possible de réaliser une boucle de récupération de levure liquide par l'utilisation d'une prise d'air.

Dans ce même mode alternatif de récupération de levure liquide, dans le flexible 15 de soutirage, en position 15B de nettoyage bien qu'on ne soit pas en mode de nettoyage, rien ne circule en provenance du réservoir 2, car d'une part la vanne 21 de sortie du réservoir 2 est fermée, et d'autre part le flexible 15 de soutirage est déconnecté du réservoir 2.

Dans ce même mode alternatif de récupération de levure liquide, il n'y a ni eau ou ni air en provenance de l'arrivée d'eau ou d'air, car soit la vanne 4 d'arrivée d'eau ou d'air est fermée, soit cette arrivée d'eau ou d'air et la vanne 4 d'arrivée correspondante n'existent pas.

C'est, au contraire, l'eau en provenance du dispositif 5 de nettoyage qui est aspirée par la pompe 1 de circulation pour pousser la levure liquide hors du tronçon commun 19 dans le tronçon 11 aller de boucle.

Dans le mode alternatif de récupération de levure liquide poussée par de l'eau, le dispositif 5 de nettoyage est connecté au reste du système de distribution de levure liquide, mais uniquement par son antenne de nettoyage 51 qui envoie de l'eau sans détergent dans le flexible 15 de soutirage qui, en position 15B de nettoyage, est relié à cette antenne 51 de nettoyage.

Le dispositif de nettoyage 5 reçoit une vanne 53 d'arrivée d'eau de nettoyage, une arrivée 54 de détergent, envoie de l'eau (qui ici n'intègre pas de détergent) par son antenne de nettoyage 51, ne récupère pas cette eau après usage par son retour de nettoyage 52, car ce retour de nettoyage 52 n'est pas connecté au reste du système de distribution de levure liquide.

La vanne 53 d'arrivée d'eau de nettoyage est ouverte, l'arrivée 54 de détergent étant inactivée, ce qui envoie de l'eau (ici sans détergent) par son antenne de nettoyage 51, dans le flexible 15, en position 15B de nettoyage. Cette eau sans détergent traverse la vanne 17 d'arrivée de levure liquide qui est ouverte, pour être ensuite aspirée par la pompe 1 de circulation laquelle va envoyer cette eau pousser la levure liquide dans la boucle de circulation de récupération de levure liquide décrite à la figure 5.

Cette eau de pousse de levure liquide en provenance du dispositif 5 de nettoyage va pousser la levure liquide dans sa boucle de circulation ouverte jusqu'à ce que cette levure liquide ait été récupérée dans le réservoir 2.

L'état ouvert ou fermé de la vanne 55 d'évacuation est indifférent, puisque le retour de nettoyage 52 est déconnecté du reste du système de distribution de levure liquide.

Le reste du système de distribution de levure liquide fonctionne de la même manière que dans le mode de récupération de levure liquide présenté à la figure 5.

La figure 7 représente schématiquement un exemple d'un système de distribution de levure liquide en boulangerie selon un mode de réalisation de l'invention, correspondant à un mode de fonctionnement en nettoyage de la tuyauterie par circulation d'eau de nettoyage, c'est-à-dire à un mode de fonctionnement en boucle de circulation d'eau de nettoyage, fermée d'abord puis ouverte ensuite pour vidange de l'eau de nettoyage usagée, en utilisant l'arrivée d'eau de nettoyage qui est déportée par rapport à la pompe de circulation. Les flèches en traits pleins représentent le sens de la circulation de l'eau de nettoyage dans la tuyauterie du système de distribution de levure liquide.

Le lavage avantageusement hebdomadaire, correspondant à un arrêt prolongé du système de distribution de levure liquide, correspond plus précisément à un procédé de nettoyage comprenant préférentiellement trois étapes. La première étape est un prélavage, c'est-à-dire un lavage de tout le circuit de distribution de levure liquide avec seulement de l'eau, de manière à vider le circuit de distribution de levure liquide de l'essentiel de la levure liquide qui y reste. La deuxième étape est un lavage proprement dit, c'est-à-dire un lavage de tout le circuit de distribution de levure liquide avec de l'eau et du détergent. Le détergent est ajouté avantageusement directement dans le dispositif 5 de nettoyage, par exemple au niveau d'une cuve de nettoyage, à l'aide d'une arrivée 54 de détergent alors activée. Dans cette deuxième étape, une première phase de 15 à 20 minutes est réalisée avec un recyclage de cette eau de lavage comprenant le détergent, pour que ce détergent ait bien le temps d'agir, suivie d'une deuxième phase plus courte qui est réalisée avec une évacuation de cette eau de lavage sale. La troisième étape est un rinçage, c'est-à-dire un lavage de tout le circuit de distribution de levure liquide avec seulement de l'eau de manière à éliminer les traces restantes de détergent. Chacune de ces phases de nettoyage va suivre le cycle suivant, mais si la phase de lavage présente généralement un recyclage pour économiser l'eau et le détergent, les phases de prélavage et de rinçage peuvent être effectuées en circuit ouvert, c'est-à-dire avec évacuation de l'eau de nettoyage dès que celle-ci a fait un tour dans la boucle de circulation d'eau de nettoyage.

L'un des cycles précédents est maintenant décrit plus en détail.

Le réservoir 2 de levure liquide est situé dans la chambre réfrigérée 8. Le réservoir 2 est complètement déconnecté du reste du système de distribution de levure liquide.

Dans ce mode de nettoyage, dans le flexible 15 de soutirage, en position 15B de nettoyage, circule de l'eau de nettoyage en provenance de l'antenne de nettoyage 51 et en direction de l'embranchement 10. De manière similaire, de l'eau de nettoyage circule dans le flexible 16 de retour, en position de nettoyage 16B, vers le retour de nettoyage 52 du dispositif 5 de nettoyage.

Dans ce même mode de nettoyage, l'eau de nettoyage en provenance du flexible 15 de soutirage, traverse la pompe 1 de circulation pour être envoyée dans le tronçon commun 19 par cette pompe 1 de circulation, et pour traverser le filtre 18, avant d'arriver à l'embranchement 10.

La circulation d'eau de nettoyage dans le circuit de circulation d'eau se déroule plus précisément de la manière suivante. De l'eau arrive par l'arrivée 53 d'eau de nettoyage, traverse le dispositif 5 de nettoyage, ou plus précisément traverse une cuve de nettoyage de celui-ci, sort par l'antenne 51 de nettoyage, passe par le flexible 15 de soutirage en position 15B de nettoyage, avant de traverser la vanne 17 d'arrivée de levure qui est ouverte, remonte vers la pompe 1 de circulation, traverse le filtre 18 à levure, et arrive à l'embranchement 10.

Au niveau de l'embranchement 10, la tuyauterie se sépare en deux parties, un tronçon 11 d'antenne et un tronçon 12 de retour, respectivement utilisés, dans ce mode de fonctionnement en nettoyage, comme partie aller de la boucle de circulation d'eau de nettoyage provenant de l'antenne de nettoyage 51 du dispositif 5 de nettoyage et comme partie retour de la boucle de circulation d'eau de nettoyage retournant au retour de nettoyage 52 du dispositif 5 de nettoyage.

Le tronçon 11 d'antenne va directement jusqu'à une dérivation 30. Le tronçon 12 de retour est relié au flexible 16 de retour par une vanne 14 de retour. Le tronçon 12 de retour est relié à l'embranchement 10 par une vanne 13 de transformation de boucle. La vanne 13 de transformation de boucle est située entre d'une part le point de rattachement du tronçon 12 de retour au flexible 16 de retour et d'autre part l'embranchement 10.

La tuyauterie comprend un tronçon 31 de dosage qui tombe verticalement de la dérivation 30 vers le pétrin 3 de la même manière qu'à la figure 1. La vanne 34 d'arrivée de levure fonctionnant en tout ou rien est fermée de manière à empêcher la levure liquide circulant en boucle de dériver vers le pétrin 3.

Dans ce mode de nettoyage, la vanne 17 d'arrivée de levure liquide et la vanne 14 de retour, fonctionnant en tout ou rien, sont toutes ouvertes. L'état d'ouverture de la vanne de dosage 36 est indifférent dans la mesure où la vanne 34 d'arrivée de levure liquide est fermée.

Dans ce même mode de nettoyage, la vanne 4 d'arrivée d'eau, la vanne 13 de transformation de boucle, et la vanne 34 d'arrivée de levure, fonctionnant en tout ou rien, sont toutes fermées.

D'abord, la vanne 53 d'arrivée d'eau de nettoyage est d'abord ouverte pour remplir la boucle de circulation d'eau de nettoyage propre, puis est fermée le temps que l'eau de nettoyage tourne une ou plusieurs fois dans la boucle de circulation d'eau de nettoyage, le temps d'emmener avec elle les restes de levure et/ou de détergent, la vanne 55 d'évacuation d'eau de nettoyage, fonctionnant en tout ou rien, restant alors fermée. Puis, pour changer l'eau de nettoyage, la vanne 55 d'évacuation d'eau de nettoyage est ouverte, ce qui permet à l'eau de nettoyage usagée d'être vidangée par l'évacuation 56.

L'ouverture de la vanne 14 de retour et la fermeture de la vanne 13 de transformation de boucle vont avoir pour conséquences d'une part la présence d'une boucle de circulation d'eau de nettoyage depuis le dispositif 5 de nettoyage jusqu'au point de dérivation 30 pour la partie aller de la boucle, puis depuis le point de dérivation 30 jusqu'au dispositif 5 de nettoyage pour la partie retour de la boucle. L'ouverture de la vanne 14 de retour permettant la création d'une boucle va envoyer l'eau de nettoyage, lors de son retour, circuler dans le flexible 16 de retour.

Arrivée au niveau de l'embranchement 10, puisque la vanne 13 de transformation de boucle est fermée, toute l'eau de nettoyage circule en direction de la dérivation 30 respectivement dans le tronçon 11 d'antenne utilisé ici comme partie aller de boucle puis revient dans le tronçon 12 de retour utilisé ici comme partie retour de boucle, pour ensuite réintégrer le dispositif 5 de nettoyage, sans descendre dans le pétrin 3 lorsqu'elle arrive au niveau de la dérivation 30, puisque la vanne 34 d'arrivée de levure est fermée.

Un autre type de nettoyage, incluant prélavage, lavage et rinçage, peut être réalisé également, pour nettoyer le tronçon 31. La vanne de retour 14 et la vanne 13 de transformation de boucle sont fermées. La vanne 34 d'arrivée de levure liquide et la vanne 36 de dosage sont ouvertes. Le flexible 32 est en position de nettoyage 32B et arrive en dehors du pétrin 3 vers une évacuation 37. Dans cet autre type de lavage, lavant alors le tronçon 31, il n'est pas prévu de recycler l'eau de lavage contenant du détergent ; en effet, cette eau de lavage, ne passe qu'une seule fois, tout comme l'eau de prélavage et tout comme l'eau de rinçage.

Après que toutes les dernières étapes de rinçage soient terminées, l'évacuation de l'eau de rinçage restante dans la tuyauterie peut être effectuée au niveau des différents points bas de l'installation, par exemple l'évacuation 37, l'évacuation 56 ou d'autres points bas comprenant une possibilité d'ouverture de la tuyauterie.

Quelques exemples chiffrés vont maintenant être comparés.

Dans une installation conforme au premier art antérieur, c'est-à-dire fonctionnant uniquement « en simple antenne », on obtient les caractéristiques suivantes :

**TABLEAU 1**

| Type de fluide | Levure liquide | Eau |
|---|---|---|
| Viscosité du fluide | 150 cps | 1 cps |
| Longueur tuyauterie pour ce fluide | 50m | 100m |
| Diamètre tuyauterie pour ce fluide | 26mm | 26mm |
| Vitesse de circulation du fluide | 0.52m/s | 2m/s |
| Pression de perte de charge | 2.5 bars | 2.5 bars |
| Débit de la pompe de circulation | 1000 l/h | 4000 l/h |

La pression de perte de charge est la différence entre la pression du fluide et la pression du dosage. La pression du dosage vaut entre 1 et 3 bars. Dans les tableaux présentés, la pression de dosage vaut environ 1 bar. La pression de dosage est la pression de la levure liquide au niveau du point de dosage.

Cette antenne avec une tuyauterie présentant une longueur de 50m et un diamètre de 26mm, la capacité de la tuyauterie valant donc environ 0.53 l/m (litres par mètre), aura l'inconvénient d'entraîner environ 24 litres de perte de levure liquide à chaque arrêt d'installation de plusieurs heures. Par ailleurs, cette installation requiert une pompe de circulation suffisamment puissante pour fournir un débit d'eau de nettoyage d'environ 4000 litres par heure (l/h).

Dans une installation conforme au deuxième art antérieur, c'est-à-dire fonctionnant uniquement en « boucle », on obtient les caractéristiques suivantes :

**TABLEAU 2**

| Type de fluide | Levure liquide | Eau |
|---|---|---|
| Viscosité du fluide | 150 cps | 1 cps |
| Longueur tuyauterie pour ce fluide | 100m | 100m |
| Diamètre tuyauterie pour ce fluide | 26mm | 26mm |
| Vitesse de circulation du fluide | 0.52m/s | 2m/s |
| Pression de perte de charge | 4.5 bars | 2.5 bars |
| Débit de la pompe de circulation | 1000 l/h | 4000 l/h |

Cette boucle avec une tuyauterie présentant une longueur de 100m et un diamètre de 26mm, la capacité de la tuyauterie valant donc environ 0.53 l/m (litres par mètre), aura l'inconvénient d'entraîner environ 53 litres de perte potentielle, mais cependant récupérable, toutefois au prix d'une recirculation pouvant échauffer inutilement la levure liquide (pouvant alors nécessiter également un échangeur supplémentaire pour éviter aussi de détériorer la levure liquide par des effets de cisaillement prolongés), de levure liquide à chaque arrêt d'installation de plusieurs heures, ainsi qu'un échauffement notable de tout ce volume de levure liquide séjournant donc longtemps dans la tuyauterie. Par ailleurs, cette installation requiert une pompe de circulation suffisamment puissante pour fournir un débit d'eau de nettoyage d'environ 4000 litres par heure (l/h).

Dans une installation conforme à un premier exemple optionnel de mise en oeuvre selon un mode de réalisation de l'invention, c'est-à-dire pouvant fonctionner à la fois en « double antenne » et en « boucle », on obtient les caractéristiques suivantes :

**TABLEAU 3**

| Type de fluide | Levure liquide en soutirage | Eau | Levure liquide en rafraîchissement |
|---|---|---|---|
| Viscosité du fluide | 150 cps | 1 cps | 150 cps |
| Longueur tuyauterie pour ce fluide | 50m | 100m | 100m |
| Diamètre tuyauterie pour ce fluide | 26mm | 26mm | 26mm |
| Vitesse de circulation du fluide | 0.26m/s | 2m/s | 0.26m/s |
| Pression de perte de charge | 1.5 bars | 2.5 bars | 2.5 bars |
| Débit de la pompe de circulation | 2x500 l/h | 4000 l/h | 500 l/h |

Cette double antenne avec une tuyauterie présentant une longueur de 2x50m (2 fois 50m) et un diamètre de 26mm, la capacité de la tuyauterie valant donc environ 0.53 l/m (litres par mètre), aura l'inconvénient d'entraîner environ 53 litres de perte potentielle, mais toutefois récupérable, de levure liquide à chaque arrêt d'installation de plusieurs heures, avec des pertes de charge plus faibles permettant une puissance réduite de pompe de circulation malgré le débit identique en nettoyage. Par ailleurs, cette installation requiert une pompe de circulation suffisamment puissante pour fournir un débit d'eau de nettoyage d'environ 4000 litres par heure (l/h).

Dans une installation conforme à un deuxième exemple préférentiel de mise en oeuvre selon un autre mode de réalisation de l'invention, c'est-à-dire pouvant fonctionner à la fois en « double antenne » et en « boucle », on obtient les caractéristiques suivantes :

**TABLEAU 4**

| Type de fluide | Levure liquide en soutirage | Eau | Levure liquide en rafraîchissement |
|---|---|---|---|
| Viscosité du fluide | 150 cps | 1 cps | 150 cps |
| Longueur tuyauterie pour ce fluide | 50m | 100m | 100m |
| Diamètre tuyauterie pour ce fluide | 19mm | 19mm | 19mm |
| Vitesse de circulation du fluide | 0.52m/s | 2m/s | 0.24m/s |
| Pression de perte de charge | 4 bars | 3 bars | 4 bars |
| Débit de la pompe de circulation | 2x500 l/h | 2000 l/h | 250 l/h |

Cette double antenne avec une tuyauterie présentant une longueur de 2x50m (2 fois 50m) et un diamètre de seulement 19mm, la capacité de la tuyauterie valant donc environ 0.28 l/m (litres par mètre), aura l'inconvénient plus faible de n'entraîner environ que 26 litres de perte potentielle, mais toutefois récupérable, de levure liquide à chaque arrêt d'installation de plusieurs heures. Par ailleurs, cette installation requiert une pompe de circulation notablement moins puissante puisque celle-ci n'aura à fournir qu'un débit d'eau de nettoyage d'environ 2000 litres par heure (l/h), ce qui donne également un ratio entre débit de pompe de circulation en nettoyage et débit de pompe de circulation en double alimentation moins important d'un facteur 2, permettant ainsi un bien plus faible surdimensionnement de la pompe de circulation que ceux des différents arts antérieurs présentés précédemment. C'est l'alimentation en double antenne qui permet le sous-dimensionnement de la boucle de circulation (avec tous les avantages correspondants) tout en conservant le débit d'alimentation souhaité.

## Revendications

1. Procédé de distribution de fluide alimentaire en boulangerie, comprenant une circulation de fluide alimentaire, depuis une chambre réfrigérée (8) jusqu'à au moins un point de dosage (3, 6), dans une tuyauterie d'alimentation située entre la chambre réfrigérée (8) et le point de dosage (3, 6), la chambre réfrigérée (8) étant déportée par rapport au point de dosage (3, 6), **caractérisé en ce que** la tuyauterie d'alimentation comprend deux tronçons (11, 12) de tuyauterie et un jeu de vanne(s) (13, 14) disposés de manière à ce que :
> pour une première configuration du jeu de vanne(s) (13, 14), les deux tronçons (11, 12) de tuyauterie fournissent en fluide alimentaire, en parallèle et simultanément, le point de dosage (3, 6) à partir d'au moins un réservoir (2, 20) de fluide alimentaire situé dans la chambre réfrigérée (8),
> pour au moins une autre configuration du jeu de vanne(s) (13, 14), les deux tronçons (11, 12) de tuyauterie forment une boucle de circulation de fluide.

2. Procédé de distribution de fluide alimentaire en boulangerie selon la revendication 1, **caractérisé en ce que** la boucle de circulation de fluide est une boucle de circulation de fluide alimentaire ou de fluide non alimentaire, et :
**en ce que** le fluide non alimentaire présente une viscosité d'au plus 5 centipoises (cps), de préférence d'au plus 2 centipoises (cps), encore plus de préférence d'environ 1 centipoise (cps),
et/ou **en ce que** le fluide non alimentaire est de l'eau de nettoyage.
et/ou **en ce que** le fluide alimentaire présente une viscosité d'au moins 50 centipoises (cps), de préférence d'au moins 100 centipoises (cps), encore plus de préférence d'environ 150 centipoises (cps).

3. Procédé de distribution de fluide alimentaire en boulangerie selon l'une quelconque des revendications précédentes, **caractérisé en ce que** le fluide alimentaire est un additif levant, c'est-à-dire un additif faisant lever une pâte,
et/ou **en ce que** le fluide alimentaire est de la levure liquide ou de la crème de levure ou du levain liquide ou de la crème de levain.

4. Procédé de distribution de fluide alimentaire en boulangerie selon l'une quelconque des revendications précédentes, **caractérisé en ce que** les deux tronçons (11, 12) de tuyauterie et le jeu de vanne(s) (13, 14) sont disposés de manière à ce que :
- pour une deuxième configuration du jeu de vanne(s) (13, 14), les deux tronçons (11, 12) de tuyauterie forment une boucle fermée de circulation de fluide alimentaire passant par le réservoir (2, 20) de fluide alimentaire situé dans la chambre réfrigérée (8),
- et/ou pour une troisième configuration du jeu de vanne(s) (13, 14), les deux tronçons (11, 12) de tuyauterie forment une boucle ouverte de circulation de fluide alimentaire ramenant dans la chambre réfrigérée (8) le fluide alimentaire située dans la tuyauterie en la poussant avec un fluide qui est de préférence de l'eau ou de l'air,
- et/ou pour une quatrième configuration du jeu de vanne(s) (13, 14), les deux tronçons (11, 12) de tuyauterie forment une boucle fermée de circulation d'eau de nettoyage, avant vidange de cette eau de nettoyage, avantageusement au niveau d'un ou de plusieurs points bas (37, 56) de la tuyauterie.

5. Procédé de distribution de fluide alimentaire en boulangerie selon l'une quelconque des revendications précédentes, **caractérisé en ce que** :
> les deux tronçons (11, 12) de tuyauterie sont reliés entre eux au moins :
∘ d'une part au niveau d'une dérivation (30, 60) d'alimentation du point de dosage (3, 6),
∘ d'autre part au niveau d'un embranchement (10) qui est situé en aval d'une pompe (1) de circulation de fluide mais qui n'est pas situé au niveau d'une dérivation (30, 60) d'alimentation de point de dosage (3, 6),
> l'autre configuration du jeu de vanne(s) (13, 14) ferme, pour le retour de la boucle de circulation, la direction dudit embranchement (10).

6. Procédé de distribution de fluide alimentaire en boulangerie selon la revendication 5, **caractérisé en ce que** :
> les deux tronçons (11, 12) de tuyauterie sont reliés entre eux au moins :
∘ d'une part au niveau d'une dérivation (30, 60) d'alimentation du point de dosage (3, 6),
∘ d'autre part au niveau d'un embranchement (10) qui est situé en aval d'une pompe (1) de circulation de fluide alimentaire dont l'amont est relié au réservoir (2, 20) situé dans la chambre réfrigérée (8) mais qui n'est pas situé au niveau d'une dérivation (30, 60) d'alimentation de point de dosage (3, 6),
➢ la deuxième configuration du jeu de vanne(s) (13, 14) et/ou la troisième configuration du jeu de vanne(s) (13, 14) ferme, pour le retour de la boucle fermée et/ou pour le retour de la boucle ouverte, de circulation de fluide alimentaire vers la chambre réfrigérée (8), la direction dudit embranchement (10),
et/ou **en ce que** :
> les deux tronçons (11, 12) de tuyauterie sont reliés entre eux au moins :
∘ d'une part au niveau d'une dérivation (30, 60) d'alimentation du point de dosage (3, 6),
∘ d'autre part au niveau d'un embranchement (10) qui est situé en aval d'une pompe (1) de circulation d'eau de nettoyage dont l'amont est relié à une arrivée d'eau de nettoyage (53) mais qui n'est pas situé au niveau d'une dérivation (30, 60) d'alimentation de point de dosage (3, 6),
> la quatrième configuration du jeu de vanne(s) (13, 14) ferme, pour le retour de la boucle fermée de circulation d'eau de nettoyage, la direction dudit embranchement (10).

7. Procédé de distribution de fluide alimentaire en boulangerie selon l'une quelconque des revendications précédentes, **caractérisé en ce que** les deux tronçons (11, 12) de tuyauterie sont parallèles entre eux.

8. Procédé de distribution de fluide alimentaire en boulangerie selon l'une quelconque des revendications précédentes, **caractérisé en ce que** la circulation de fluide alimentaire ne comprend qu'une seule pompe (1) de circulation, et/ou **en ce qu'**il utilise une pompe (1) de circulation qui est une pompe volumétrique.

9. Procédé de distribution de fluide alimentaire en boulangerie selon l'une quelconque des revendications 1 à 8, **caractérisé en ce qu'**après sa sortie de la chambre réfrigérée (8), au moins une partie du fluide alimentaire en circulation est poussée par de l'eau ou par de l'air sur une partie de la tuyauterie d'alimentation, avant de se déverser dans le point de dosage (3, 6),
et avantageusement **en ce que** :
> la circulation de fluide alimentaire comprend une pompe (1) de circulation,
➢ la prise d'eau (4) ou la prise d'air (4) est située juste en amont de cette pompe (1) de circulation.

10. Procédé de distribution de fluide alimentaire en boulangerie selon l'une quelconque des revendications précédentes, **caractérisé en ce que** :
> la circulation de fluide alimentaire s'effectue, depuis la chambre réfrigérée (8) jusqu'à plusieurs points de dosage (3, 6), dans une tuyauterie d'alimentation située entre la chambre réfrigérée (8) et les points de dosage (3, 6), la chambre réfrigérée (8) étant déportée par rapport aux points de dosage (3, 6),
> les deux tronçons (11, 12) de tuyauterie et le jeu de vanne(s) (13, 14) sont disposés de manière à ce que :
∘ pour la première configuration du jeu de vanne(s) (13, 14), les deux tronçons (11, 12) de tuyauterie fournissent en fluide alimentaire, en parallèle et simultanément, plusieurs des points de dosage (3, 6), de préférence tous les points de dosage (3, 6), à partir d'au moins un réservoir (2, 20) de fluide alimentaire situé dans la chambre réfrigérée (8),
∘ pour au moins l'autre configuration du jeu de vanne(s) (13, 14), les deux tronçons (11, 12) de tuyauterie forment une seule boucle de circulation de fluide,
et avantageusement **en ce que** les deux tronçons (11, 12) de tuyauterie sont reliés entre eux au niveau de plusieurs des dérivations (30, 60) d'alimentation respectives des points de dosage (3, 6), de préférence au niveau de toutes les dérivations (30, 60) d'alimentation respectives des points de dosage (3, 6).

11. Procédé de distribution de fluide alimentaire en boulangerie selon l'une quelconque des revendications 5 à 10, **caractérisé en ce que** :
➢ pour la deuxième et/ou la troisième configuration du jeu de vanne(s) (13, 14), la boucle de circulation de fluide alimentaire passant par la chambre réfrigérée (8) est formée :
∘ d'une part par l'ouverture d'une première vanne (14) reliant le tronçon de retour (12) à la portion (16) de tuyauterie allant à la chambre réfrigérée (8),
∘ d'autre part par la fermeture d'une deuxième vanne reliant le tronçon de retour (12) à l'embranchement (10),
ou avantageusement **en ce que** :
> pour la deuxième et/ou la troisième configuration du jeu de vanne(s), la boucle de circulation de fluide alimentaire passant par la chambre réfrigérée (8) est formée par le changement d'état d'une vanne trois voies qui :
∘ d'une part ouvre le passage entre le tronçon de retour (12) et la portion (16) de tuyauterie allant à la chambre réfrigérée (8),
∘ d'autre part ferme le passage entre le tronçon de retour (12) et l'embranchement (10).

12. Procédé de distribution de fluide alimentaire en boulangerie selon l'une quelconque des revendications 5 à 11, caractérisé en ce :
> qu'une sonde de température (33) est située au niveau de la dérivation (30) d'alimentation de point de dosage (3) la plus éloignée de la chambre réfrigérée (8),
> qu'un dépassement d'un seuil de température au niveau de cette sonde de température (33) déclenche le passage de la première configuration du jeu de vanne(s) (13, 14) à la deuxième configuration du jeu de vanne(s) (13, 14), le seuil de température étant de préférence compris entre 1°C et 7°C, le seuil de température étant encore plus de préférence compris entre 2°C et 4°C.

13. Procédé de distribution de fluide alimentaire en boulangerie selon l'une quelconque des revendications 2 à 12, **caractérisé en ce que** une même pompe (1) de circulation fait circuler le fluide alimentaire ou l'eau de nettoyage dans la tuyauterie,
et avantageusement **en ce que** :
> la vitesse de circulation du fluide alimentaire reste inférieure à 0.7 m/s, de préférence inférieure à 0.5 m/s,
➢ la vitesse de circulation de l'eau de nettoyage reste supérieure à 1.5 m/s, de préférence supérieure à 2.0 m/s.

14. Procédé de distribution de fluide alimentaire en boulangerie selon l'une quelconque des revendications précédentes, **caractérisé en ce que** la longueur de la tuyauterie entre d'une part le réservoir (2, 20) de fluide alimentaire de la chambre réfrigérée (8) et d'autre part le point de dosage (3) le plus éloigné de la chambre réfrigérée (8) est supérieure à 10m, de préférence supérieure à 20m, encore plus de préférence supérieure à 30m, et/ou inférieure à 100m, de préférence inférieure à 50m.

15. Procédé de distribution de fluide alimentaire en boulangerie selon l'une quelconque des revendications précédentes, **caractérisé en ce que** :
> l'eau qui pousse le fluide alimentaire est à une pression d'au moins 2bars, de préférence d'au moins 3 bars, encore plus de préférence d'au moins 5 bars,
> et/ou le fluide alimentaire qui circule est à une pression d'au moins 2bars, de préférence d'au moins 3 bars, encore plus de préférence d'au moins 5 bars.

16. Procédé de distribution de fluide alimentaire en boulangerie selon l'une quelconque des revendications précédentes, **caractérisé en ce que** le point de dosage (3, 6) est un pétrin ou les points de dosage (3, 6) sont des pétrins.

17. Système de distribution de fluide alimentaire en boulangerie, comprenant :
- un point de dosage (3, 6),
- une chambre réfrigérée (8) déportée par rapport au point de dosage (3, 6), comprenant au moins un réservoir (2, 20) de fluide alimentaire,
- une tuyauterie d'alimentation disposée entre la chambre réfrigérée (8) et le point de dosage (3, 6) de manière à ce que du fluide alimentaire circule depuis la chambre réfrigérée (8) jusqu'au point de dosage (3, 6),
disposés de manière à mettre en oeuvre le procédé de distribution de fluide alimentaire en boulangerie selon l'une quelconque des revendications précédentes.

18. Système de distribution de fluide alimentaire selon la revendication 17, **caractérisé en ce que** le diamètre intérieur des deux tronçons (11, 12) de la tuyauterie d'alimentation est compris entre 10 et 51mm, de préférence compris entre 19 et 38mm.

19. Système de distribution de fluide alimentaire selon l'une quelconque des revendications 17 à 18, **caractérisé en ce qu'**il comprend un réservoir (2, 20) de fluide alimentaire dans la chambre réfrigérée (8) et **en ce que** la capacité du réservoir (2, 20) de fluide alimentaire est comprise entre 100 litres et 1000 litres, de préférence comprise entre 100 litres et 600 litres ou entre 300 litres et 1000 litres, encore plus de préférence comprise entre 300 litres et 600 litres.

## Patentansprüche

1. Verfahren zur Verteilung von Lebensmittelfluid in Bäckereien, umfassend das Zirkulieren von Lebensmittelfluid von einer Kühlkammer (8) zu wenigstens einer Dosierstelle (3, 6) in einer Versorgungsleitung, die zwischen der Kühlkammer (8) und der Dosierstelle (3, 6) angeordnet ist, wobei die Kühlkammer (8) von der Dosierstelle (3, 6) entfernt ist, **dadurch gekennzeichnet, dass** die Versorgungsleitung zwei Rohrleitungsabschnitte (11, 12) und einen Ventilsatz (13, 14) umfasst, die derart angeordnet sind, dass:
> bei einer ersten Konfiguration des Ventilsatzes (13, 14) die beiden Rohrleitungsabschnitte (11, 12) parallel und gleichzeitig die Dosierstelle (3, 6) aus wenigstens einem in der Kühlkammer (8) befindlichen Vorratsbehälter (2, 20) für Lebensmittelfluid mit Lebensmittelfluid versorgen,
> bei wenigstens einer weiteren Konfiguration des Ventilsatzes (13, 14) die beiden Rohrleitungsabschnitte (11, 12) eine Fluidzirkulationsschleife bilden.

2. Verfahren zur Verteilung von Lebensmittelfluid in Bäckereien nach Anspruch 1, **dadurch gekennzeichnet, dass** die Fluidzirkulationsschleife eine Zirkulationsschleife für Lebensmittelfluid oder Nichtlebensmittelfluid ist, und:
dass das Nichtlebensmittelfluid eine Viskosität von höchstens 5 Centipoise (cps), bevorzugt höchstens 2 Centipoise (cps), stärker bevorzugt etwa 1 Centipoise (cps) aufweist,
und/oder dass das Nichtlebensmittelfluid Reinigungswasser ist,
und/oder dass das Lebensmittelfluid eine Viskosität von wenigstens 50 Centipoise (cps), bevorzugt von wenigstens 100 Centipoise (cps), stärker bevorzugt von etwa 150 Centipoise (cps) aufweist.

3. Verfahren zur Verteilung von Lebensmittelfluid in Bäckereien nach einem der vorhergehenden Ansprüche, **dadurch gekennzeichnet, dass** das Lebensmittelfluid ein Backzusatz ist, d. h. ein Zusatz, der einen Teig aufgehen lässt,
und/oder dass das Lebensmittelfluid Flüssighefe oder Hefecreme oder Flüssigsauerteig oder Sauerteigcreme ist.

4. Verfahren zur Verteilung von Lebensmittelfluid in Bäckereien nach einem der vorhergehenden Ansprüche, **dadurch gekennzeichnet, dass** die beiden Rohrleitungsabschnitte (11, 12) und der Ventilsatz (13, 14) derart angeordnet sind, dass:
- bei einer zweiten Konfiguration des Ventilsatzes (13, 14) die beiden Rohrleitungsabschnitte (11, 12) eine geschlossene Zirkulationsschleife für Lebensmittelfluid durch den in der Kühlkammer (8) befindlichen Vorratsbehälter (2, 20) für Lebensmittelfluid bilden,
- und/oder für eine dritte Konfiguration des Ventilsatzes (13, 14) die beiden Rohrleitungsabschnitte (11, 12) eine offene Zirkulationsschleife für Lebensmittelfluid bilden, die das in der Rohrleitung befindliche Lebensmittelfluid in die Kühlkammer (8) zurückführt, indem sie es mit einem Fluid, das bevorzugt Wasser oder Luft ist, schiebt,
- und/oder bei einer vierten Konfiguration des Ventilsatzes (13, 14) die beiden Rohrleitungsabschnitte (11, 12) eine geschlossene Zirkulationsschleife für Reinigungswasser bilden, bevor das Reinigungswasser bevorzugt an einem oder mehreren Tiefpunkten (37, 56) der Rohrleitung abgelassen wird.

5. Verfahren zur Verteilung von Lebensmittelfluid in Bäckereien nach einem der vorhergehenden Ansprüche, **dadurch gekennzeichnet, dass**:
> die beiden Rohrleitungsabschnitte (11, 12) miteinander verbunden sind, und zwar wenigstens:
∘ einerseits an einer Versorgungsumleitung (30, 60) der Dosierstelle (3, 6),
∘ andererseits an einer Abzweigung (10), die sich stromabwärts einer Fluidzirkulationspumpe (1) befindet, aber nicht an einer Versorgungsumleitung (30, 60) der Dosierstelle (3, 6) liegt,
> eine andere Konfiguration des Ventilsatzes (13, 14) für den Rücklauf der Zirkulationsschleife die Richtung der Abzweigung (10) schließt.

6. Verfahren zur Verteilung von Lebensmittelfluid in Bäckereien nach Anspruch 5, **dadurch gekennzeichnet, dass**:
> die beiden Rohrleitungsabschnitte (11, 12) miteinander verbunden sind, und zwar wenigstens:
∘ einerseits an einer Versorgungsumleitung (30, 60) der Dosierstelle (3, 6),
∘ andererseits an einer Abzweigung (10), die sich stromabwärts einer Pumpe (1) zur Zirkulation von Lebensmittelfluid befindet, deren Oberseite mit dem in der Kühlkammer (8) befindlichen Vorratsbehälter (2, 20) verbunden ist, die sich aber nicht an einer Versorgungsumleitung (30, 60) der Dosierstelle (3, 6) befindet,
> die zweite Konfiguration des Ventilsatzes (13, 14) und/oder die dritte Konfiguration des Ventilsatzes (13, 14) für den Rücklauf von der geschlossenen Schleife und/oder für den Rücklauf von der offenen Schleife die Richtung der Abzweigung (10) der Zirkulation von Lebensmittelfluid zu der Kühlkammer (8) schließt,
und/oder dadurch, dass:
> die beiden Rohrleitungsabschnitte (11, 12) miteinander verbunden sind, wenigstens:
∘ einerseits an einer Versorgungsumleitung (30, 60) der Dosierstelle (3, 6),
∘ andererseits an einer Abzweigung (10), die sich stromabwärts einer Reinigungswasser-Zirkulationspumpe (1) befindet, deren stromaufwärtige Seite mit einem Reinigungswassereinlass (53) verbunden ist, die sich aber nicht an einer Versorgungsumleitung (30, 60) der Dosierstelle (3, 6) befindet,
> die vierte Konfiguration des Ventilsatzes (13, 14) für den Rücklauf aus der geschlossenen Schleife des Reinigungswassers die Richtung der Abzweigung (10) schließt.

7. Verfahren zur Verteilung von Lebensmittelfluid in Bäckereien nach einem der vorhergehenden Ansprüche, **dadurch gekennzeichnet, dass** die beiden Rohrleitungsabschnitte (11, 12) parallel zueinander verlaufen.

8. Verfahren zur Verteilung von Lebensmittelfluid in Bäckereien nach einem der vorhergehenden Ansprüche, **dadurch gekennzeichnet, dass** die Zirkulation des Lebensmittelfluids nur eine einzige Zirkulationspumpe (1) umfasst, und/oder dass eine Zirkulationspumpe (1) verwendet wird, die eine Verdrängerpumpe ist.

9. Verfahren zur Verteilung von Lebensmittelfluid in Bäckereien nach einem der Ansprüche 1 bis 8, **dadurch gekennzeichnet, dass** nach dem Verlassen der Kühlkammer (8) wenigstens ein Teil des zirkulierenden Lebensmittelfluids durch Wasser oder Luft über einen Teil der Versorgungsleitung geschoben wird, bevor es in die Dosierstelle (3, 6) fließt,
und vorteilhafterweise dadurch, dass:
> die Zirkulation des Lebensmittelfluids eine Zirkulationspumpe (1) umfasst,
> der Wassereinlass (4) oder der Lufteinlass (4) unmittelbar stromaufwärts dieser Zirkulationspumpe (1) angeordnet ist.

10. Verfahren zur Verteilung von Lebensmittelfluid in Bäckereien nach einem der vorhergehenden Ansprüche, **dadurch gekennzeichnet, dass**:
> die Zirkulation des Lebensmittelfluids von der Kühlkammer (8) zu mehreren Dosierstellen (3, 6) in einer Versorgungsleitung zwischen der Kühlkammer (8) und den Dosierstellen (3, 6) erfolgt, wobei die Kühlkammer (8) von den Dosierstellen (3, 6) abgesetzt ist,
> die beiden Rohrleitungsabschnitte (11, 12) und der Ventilsatz (13, 14) derart angeordnet sind, dass :
o bei der ersten Konfiguration des Ventilsatzes (13, 14) die beiden Rohrleitungsabschnitte (11, 12) parallel und gleichzeitig mehrere der Dosierstellen (3, 6), bevorzugt alle Dosierstellen (3, 6), aus wenigstens einem in der Kühlkammer (8) befindlichen Vorratsbehälter (2, 20) für Lebensmittelfluid mit Lebensmittelfluid versorgen,
o bei wenigstens der anderen Konfiguration des Ventilsatzes (13, 14) die beiden Rohrleitungsabschnitte (11, 12) eine einzige Fluidzirkulationsschleife bilden,
und vorteilhafterweise dadurch, dass die beiden Rohrleitungsabschnitte (11, 12) an mehreren der jeweiligen Versorgungsumleitungen (30, 60) der Dosierstellen (3, 6), bevorzugt an allen jeweiligen Versorgungsumleitungen (30, 60) der Dosierstellen (3, 6), miteinander verbunden sind.

11. Verfahren zur Verteilung von Lebensmittelfluid in Bäckereien nach einem der Ansprüche 5 bis 10, **dadurch gekennzeichnet, dass**:
> bei der zweiten und/oder dritten Konfiguration des Ventilsatzes (13, 14) die durch die Kühlkammer (8) verlaufende Zirkulationsschleife für Lebensmittelfluid gebildet wird:
o einerseits durch das Öffnen eines ersten Ventils (14), das den Rücklaufabschnitt (12) mit dem zur Kühlkammer (8) führenden Rohrleitungsabschnitt (16) verbindet,
o andererseits durch das Schließen eines zweiten Ventils, das den Rücklaufabschnitt (12) mit der Abzweigung (10) verbindet,
oder vorteilhafterweise dadurch, dass:
> für die zweite und/oder dritte Konfiguration des Ventilsatzes die durch die Kühlkammer (8) verlaufende Zirkulationsschleife für Lebensmittelfluid durch die Zustandsänderung eines Dreiwegeventils gebildet wird, das:
∘ einerseits den Durchgang zwischen dem Rücklaufabschnitt (12) und dem Rohrleitungsabschnitt (16) zur Kühlkammer (8) öffnet,
∘ andererseits den Durchgang zwischen dem Rücklaufabschnitt (12) und der Abzweigung (10) schließt.

12. Verfahren zur Verteilung von Lebensmittelfluid in Bäckereien nach einem der Ansprüche 5 bis 11, **dadurch gekennzeichnet, dass**:
> ein Temperatursensor (33) an der am weitesten von der Kühlkammer (8) entfernten Versorgungsumleitung (30) der Dosierstelle (3) angeordnet ist,
> ein Überschreiten eines Temperaturschwellenwerts an diesem Temperatursensor (33) den Übergang von der ersten Konfiguration des Ventilsatzes (13, 14) zur zweiten Konfiguration des Ventilsatzes (13, 14) auslöst, wobei der Temperaturschwellenwert bevorzugt zwischen 1 °C und 7 °C liegt und der Temperaturschwellenwert stärker bevorzugt zwischen 2 °C und 4 °C liegt.

13. Verfahren zur Verteilung von Lebensmittelfluid in Bäckereien nach einem der Ansprüche 2 bis 12, **dadurch gekennzeichnet, dass** ein und dieselbe Zirkulationspumpe (1) das Lebensmittelfluid oder das Reinigungswasser in der Rohrleitung zirkulieren lässt, und vorteilhafterweise dadurch, dass:
> die Zirkulationsgeschwindigkeit des Lebensmittelfluids unter 0,7 m/s, bevorzugt unter 0,5 m/s, bleibt,
> die Zirkulationsgeschwindigkeit des Reinigungswassers größer als 1,5 m/s, bevorzugt größer als 2,0 m/s, bleibt.

14. Verfahren zur Verteilung von Lebensmittelfluid in Bäckereien nach einem der vorhergehenden Ansprüche, **dadurch gekennzeichnet, dass** die Länge der Rohrleitung zwischen einerseits dem Vorratsbehälter (2, 20) für Lebensmittelfluid in der Kühlkammer (8) und andererseits dem am weitesten von der Kühlkammer (8) entfernten Dosierpunkt (3) größer als 10 m, bevorzugt größer als 20 m, stärker bevorzugt größer als 30 m, und/oder kleiner als 100 m, bevorzugt kleiner als 50 m, ist.

15. Verfahren zur Verteilung von Lebensmittelfluid in Bäckereien nach einem der vorhergehenden Ansprüche, **dadurch gekennzeichnet, dass**:
> das Wasser, das das Lebensmittelfluid schiebt, einen Druck von wenigstens 2 bar, bevorzugt wenigstens 3 bar, stärker bevorzugt wenigstens 5 bar, aufweist,
> und/oder das zirkulierende Lebensmittelfluid einen Druck von wenigstens 2 bar, bevorzugt wenigstens 3 bar, stärker bevorzugt wenigstens 5 bar, aufweist.

16. Verfahren zur Verteilung von Lebensmittelfluid in Bäckereien nach einem der vorhergehenden Ansprüche, **dadurch gekennzeichnet, dass** die Dosierstelle (3, 6) ein Petrin ist oder die Dosierstellen (3, 6) Petrine sind.

17. System zur Verteilung von Lebensmittelfluid in Bäckereien, umfassend:
- eine Dosierstelle (3, 6),
- eine Kühlkammer (8), die von der Dosierstelle (3, 6) entfernt ist und wenigstens einen Vorratsbehälter (2, 20) für Lebensmittelfluid enthält,
- eine Versorgungsleitung, die zwischen der Kühlkammer (8) und der Dosierstelle (3, 6) derart angeordnet ist, dass Lebensmittelfluid von der Kühlkammer (8) zur Dosierstelle (3, 6) fließt,
derart angeordnet, dass das Verfahren zur Verteilung von Lebensmittelfluid in Bäckereien nach einem der vorhergehenden Ansprüche durchgeführt wird.

18. System zur Verteilung von Lebensmittelfluid nach Anspruch 17, **dadurch gekennzeichnet, dass** der Innendurchmesser der beiden Abschnitte (11, 12) der Versorgungsleitung zwischen 10 und 51 mm, bevorzugt zwischen 19 und 38 mm, liegt.

19. System zur Verteilung von Lebensmittelfluid nach einem der Ansprüche 17 bis 18, **dadurch gekennzeichnet, dass** es einen Vorratsbehälter (2, 20) für Lebensmittelfluid in der Kühlkammer (8) umfasst und dass das Fassungsvermögen des Vorratsbehälters (2, 20) für Lebensmittelfluid zwischen 100 Litern und 1000 Litern liegt, bevorzugt zwischen 100 Litern und 600 Litern oder zwischen 300 Litern und 1000 Litern, stärker bevorzugt zwischen 300 Litern und 600 Litern.

## Claims

1. Method for distributing food fluid in a bakery, comprising a circulation of food fluid, from a cold room (8) to at least one metering point (3, 6), in supply piping located between the cold room (8) and the metering point (3, 6), the cold room (8) being at a distance from the metering point (3, 6), the cold room being remote from the metering point **characterized in that** the supply piping comprises two piping segments (11, 12) and a set of valves (13, 14) arranged so that:
> for a first configuration of the set of valves (13, 14), the two piping segments (11, 12) supply the metering point (3, 6) with food fluid, in parallel and simultaneously, from at least one tank (2, 20) of food fluid located in the cold room (8),
> for at least one other configuration of the set of valves (13, 14), the two piping segments (11, 12) form a fluid circulation loop.

2. Method for distributing food fluid in a bakery according to claim 1, wherein the fluid circulation loop is a circulation loop for food fluid or non-food fluid, and:
wherein the non-food fluid has a viscosity of at most 5 centipoise (cps), preferably at most 2 centipoise (cps), more preferably about 1 centipoise (cps), and/or wherein the non-food fluid is cleaning water,
and/or wherein the food fluid has a viscosity of at least 50 centipoise (cps), preferably at least 100 centipoise (cps), more preferably about 150 centipoise (cps).

3. Method for distributing food fluid in a bakery according to any one of the preceding claims, wherein the food fluid is a leavening agent, in other words an agent that causes a dough to rise,
and/or wherein the food fluid is liquid yeast or cream yeast or liquid levain or cream levain.

4. Method for distributing food fluid in a bakery according to any one of the preceding claims, wherein the two piping segments (11, 12) and the set of valves (13, 14) are arranged in such a way that:
- for a second configuration of the set of valves (13, 14), the two piping segments (11, 12) form a closed circulation loop for food fluid, passing through the tank (2, 20) of food fluid located in the cold room (8),
- and/or for a third configuration of the set of valves (13, 14), the two piping segments (11, 12) form an open circulation loop for food fluid which returns the food fluid located in the piping to the cold room (8), by pushing it with a fluid which is preferably water or air,
- and/or for a fourth configuration of the set of valves (13, 14), the two piping segments (11, 12) form a closed circulation loop for cleaning water, before this cleaning water is drained, preferably at one or more low points (37, 56) of the piping.

5. Method for distributing food fluid in a bakery according to any one of the preceding claims, wherein:
> the two piping segments (11, 12) are interconnected at least:
∘ on the one hand at a bypass (30, 60) supplying the metering point (3, 6),
∘ on the other hand at a branch (10) located downstream of a fluid circulation pump (1) but which is not located at a bypass (3, 6) supplying the metering point (3, 6),
> the other configuration of the set of valves (13, 14) close off, for the return portion of the circulation loop, the direction of said branch (10).

6. Method for distributing food fluid in a bakery according to claim 5, wherein:
> the two piping segments (11, 12) are interconnected at least:
∘ on the one hand at a bypass (30, 60) supplying the metering point (3, 6),
∘ on the other hand, at a branch (10) located downstream of a food fluid circulation pump (1) which upstream is connected to the tank (2, 20) located in the cold room (8) but which is not located at a bypass (30, 60) supplying the metering point (3, 6),
> the second configuration of the set of valves (13, 14) and/or the third configuration of the set of valves (13, 14) closes off the direction of said branch (10), for the return portion of the closed loop and/or for the return portion of the open circulation loop of food fluid, towards the cold room (8),
and wherein:
➢ the two piping segments (11, 12) are interconnected at least:
∘ on the one hand at a bypass (30, 60) supplying the metering point (3, 6),
∘ on the other hand at a branch (10) located downstream of a cleaning water circulation pump (1) which upstream is connected to a cleaning water inlet (53) but which is not located at a bypass (30, 60) supplying a metering point (3, 6),
> the fourth configuration of the set of valves (13, 14) closes off the direction of said branch (10), for the return portion of the closed circulation loop for cleaning water.

7. Method for distributing food fluid in a bakery according to any one of the preceding claims, wherein the two piping segments (11, 12) are parallel to each other.

8. Method for distributing food fluid in a bakery according to any one of the preceding claims, wherein the circulation of food fluid comprises only one circulation pump (1), and/or uses a circulating pump (1) which is volumetric.

9. Method for distributing food fluid in a bakery according to any one of claims 1 to 8, wherein, after leaving the cold room (8), at least a portion of the circulating food fluid is pushed by water or by air in a portion of the supply piping before pouring into the metering point (3, 6) and
wherein advantageously:
- the circulation of food fluid comprises a circulation pump (1),
- the water inlet (4) or the air inlet (4) is located just upstream of this circulation pump (1).

10. Method for distributing food fluid in a bakery according to any one of the preceding claims, wherein:
> the circulation of food fluid occurs, from the cold room (8) to several metering points (3, 6), in supply piping located between the cold room (8) and the metering points (3, 6), the cold room (8) being at a distance from the metering points (3, 6),
> the two piping segments (11, 12) and the set of valves (13, 14) are arranged in such a way that:
∘ for the first configuration of the set of valves (13, 14), the two piping segments (11, 12) supply food fluid, in parallel and simultaneously, to several of the metering points (3, 6), preferably all the metering points (3, 6), from at least one tank (2, 20) of food fluid located in the cold room (8),
∘ for at least the other configuration of the set of valves (13, 14), the two piping segments (11, 12) form a single fluid circulation loop,
and advantageously wherein the two piping segments (11, 12) are interconnected at several respective bypasses (30, 60) supplying the metering points (3, 6), preferably at all the respective bypasses (30, 60) supplying the metering points (3, 6).

11. Method for distributing food fluid in a bakery according to any one of claims 5 to 10, wherein:
➢ for the second and/or third configuration of the set of valves (13, 14), the food fluid circulation loop passing through the cold room (8) is formed:
∘ on the one hand by opening a first valve (14) connecting the return segment (12) to the piping portion (16) leading to the cold room (8),
∘ on the other hand by closing a second valve connecting the return segment (12) to the branch (10),
or advantageously wherein:
> for the second and/or third configuration of the set of valves, the food fluid circulation loop passing through the cold room (8) is formed by changing the state of a three-way valve which:
∘ on the one hand opens the passage between the return segment (12) and the piping portion (16) leading to the cold room (8),
∘ on the other hand closes the passage between the return segment (12) and the branch (10).

12. Method for distributing food fluid in a bakery according to any one of claims 5 to 11, wherein:
> a temperature sensor (33) is located at the metering point (3) supply bypass (30) furthest from the cold room (8),
> the exceeding of a temperature threshold at this temperature sensor (33) triggers the transition from the first configuration of the set of valves (13, 14) to the second configuration of the set of valves (13, 14), the temperature threshold preferably being comprised between 1°C and 7°C, the temperature threshold being even more preferably comprised between 2°C and 4°C.

13. Method for distributing food fluid in a bakery according to any one of claims 2 to 12, wherein a same circulation pump (1) is used to circulate the food fluid or the cleaning water in the piping,
and advantageously, wherein:
> the flow velocity of the food fluid remains below 0.7 m/s, preferably below 0.5 m/s,
> the flow velocity of the cleaning water remains greater than 1.5 m/s, preferably greater than 2.0 m/s.

14. Method for distributing food fluid in a bakery according to any one of the preceding claims, wherein the length of the piping between the tank (2, 20) of food fluid in the cold room (8) and the metering point (3) furthest from the cold room (8) is greater than 10 m, preferably greater than 20 m, more preferably greater than 30 m, and/or less than 100 m, preferably less than 50 m.

15. Method for distributing food fluid in a bakery according to any one of the preceding claims, wherein:
> the water that pushes the food fluid is at a pressure of at least 2 bar, preferably at least 3 bar, more preferably at least 5 bar,
> and/or the circulating food fluid is at a pressure of at least 2 bar, preferably at least 3 bar, more preferably at least 5 bar.

16. Method for distributing food fluid in a bakery according to any one of the preceding claims, wherein the metering point (3, 6) is a mixer or the metering points (3, 6) are mixers.

17. System for distributing food fluid in a bakery, comprising:
- a metering point (3, 6),
- a cold room (8) at a distance from the metering point (3, 6), comprising at least one tank (2, 20) of food fluid,
- supply piping arranged between the cold room (8) and the metering point (3, 6) in such a way that food fluid flows from the cold room (8) to the metering point (3, 6),
these being arranged to implement the method for distributing food fluid in a bakery according to any one of the preceding claims.

18. System for distributing food fluid according to claim 31, wherein the inner diameter of the two segments (11, 12) of the supply piping is comprised between 10 and 51 mm, preferably between 19 and 38 mm.

19. System for distributing food fluid according to any one of claims 17 to 18, wherein it comprises a tank (2, 20) of food fluid in the cold room (8) and wherein the capacity of the tank (2, 20) of food fluid is comprised between 100 liters and 1000 liters, preferably between 100 liters and 600 liters or between 300 liters and 1000 liters, more preferably between 300 liters and 600 liters.
